(19) Europäisches Patentamt
European Patent Office
Office européen des brevets

(11) **EP 2 366 749 B1**

(12) **EUROPEAN PATENT SPECIFICATION**

(45) Date of publication and mention
of the grant of the patent:
**05.12.2012 Bulletin 2012/49**

(51) Int Cl.:
*C09J 7/02* (2006.01)  *C09J 133/06* (2006.01)

(21) Application number: **11004388.2**

(22) Date of filing: **28.02.2008**

(54) **Acrylic pressure-sensitive adhesive tape or sheet and process for producing the same**

Druckempfindliches Acryl-Klebeband oder -folie sowie Herstellungsverfahren dafür

Bande ou feuille adhésive en acrylique sensible à la pression et procédé de production associé

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **12.03.2007 JP 2007061258**

(43) Date of publication of application:
**21.09.2011 Bulletin 2011/38**

(62) Document number(s) of the earlier application(s) in accordance with Art. 76 EPC:
**08720305.5 / 2 123 728**

(73) Proprietor: **Nitto Denko Corporation**
**Osaka 567-8680 (JP)**

(72) Inventors:
• **Takashi, Kondou**
**Ibaraki-shi**
**Osaka 567-8680 (JP)**
• **Mitsuyoshi, Shirai**
**Ibaraki-shi**
**Osaka 567-8680 (JP)**
• **Masanori, Uesugi**
**Ibaraki-shi**
**Osaka 567-8680 (JP)**
• **Masayuki, Okamoto**
**Ibaraki-shi**
**Osaka 567-8680 (JP)**
• **Kazuhisa, Maeda**
**Ibaraki-shi**
**Osaka 567-8680 (JP)**

(74) Representative: **Grünecker, Kinkeldey, Stockmair & Schwanhäusser**
**Leopoldstrasse 4**
**80802 München (DE)**

(56) References cited:
**EP-A1- 1 724 320**

**Description**

Technical Field

The present invention relates to an acrylic pressure-sensitive adhesive tape or sheet favorably adhesive to hard-to-adhere adherends, such as automotive coatings, having the surface control agent bleeding on the surface.

Background Art

For protection or decoration of the exterior or the body of automobiles, components such as (side) moldings and plates are usually mounted and fixed with a foam-based pressure-sensitive adhesive tape (hereinafter such a "tape or sheet" is also referred to simply as a "tape" or "sheet"). Pressure-sensitive adhesives used in these applications should be adhesive enough to the paints and should have preferable weathering resistance, water resistance, petrol resistance, and durability. For that reason, acrylic pressure-sensitive adhesives, in particular those containing additional functional groups such as carboxyl groups, have been used commonly for preservation of adhesiveness.
In recent automobile coatings, the base layer used therein is more frequently an aqueous system, and the kind and the amount of the surface control agent used therein have been changed. After intensive studies, the inventors have found that the problems of insufficient adhesion was caused by bleeding, on the coating surface, of the surface control agent (a leveling agent, such as the surface control agent produced by Kusumoto Chemicals, Ltd.; see Patent Document 1) blended into the paint for prevention of repelling during coating. Actually, there are some conventional acrylic pressure-sensitive adhesive sheets that do not show sufficient adhesiveness under the influence by the surface control agent bleeding on the coating surface (see Patent Document 2). It is because such bleeding generates a less cohesive layer on the coating surface, inhibiting generation of preferable adhesive strength.
There are varieties of such surface control agents, including silicone-based, acrylic oligomer-based, and silicone/acrylic copolymer-based agents, different in polarity from high to low. Conventional acrylic pressure-sensitive adhesives show high adhesive strength (adhesive power; tackiness) to highly polar coatings having the surface control agent bleeding thereon, but in the case of the coating having the low-polar surface control agent bleeding thereon, the adhesive does not absorb the surface control agent, forming a weekly cohesive layer on the coating surface and thus prohibiting preferable adhesive strength. Alternatively in the case of a pressure-sensitive adhesive containing a conventional basic monomer, the adhesive does not absorb the high-polar surface control agent because the adhesive is less polar, and thus, it is difficult to absorb the high-polar to low-polar surface control agents simultaneously with one adhesive. In addition, Patent Document 3 discloses acrylic adhesives containing an acrylic copolymer of 2-ethylhexyl acrylate/n-butyl acrylate/$\alpha,\beta$-ethylene-based unsaturated carboxylic acid for application on fluoroplastic and paint coating surfaces, but none of them can improve the adhesive strength by absorption of the high-polar to low-polar surface control agents.
Accordingly, there is a demand for a method of obtaining high adhesive strength to hard-to-adhere adherends such as coatings having the surface control agent bleeding thereon.
Patent Document 1: Japanese Unexamined Patent Publication No. 2002-66206
Patent Document 2: Japanese Unexamined Patent Publication No. 2003-226834
Patent Document 3: Japanese Patent No. 2732411

Disclosure of Invention

Problems to be Solved by the Invention

Accordingly, an object of the present invention is to provide an acrylic pressure-sensitive adhesive sheet showing high adhesive strength to hard-to-adhere adherends such as coatings having the surface control agent bleeding thereon. Another object of the present invention is to provide an acrylic pressure-sensitive adhesive sheet showing high adhesive strength to the coatings having the surface control agent bleeding thereon, irrespective of whether the surface control agent is high polar or low polar.
Yet another object of the present invention is to provide an acrylic pressure-sensitive adhesive sheet favorably used in application for adhesion to automotive coatings.

Means to Solve the Problems

After intensive studies to solve the problems above, the inventors have found that it was needed to absorb both high- and low-polar control agents to make a pressure-sensitive adhesive sheet show high adhesive strength to hard-to-adhere adherend such as coatings having the surface control agent bleeding thereon and that it was possible to absorb the high-polar surface control agent with an acrylic acid monomer unit and the low-polar surface control agent with n-butyl acrylate monomer and 2-ethylhexyl acrylate monomer units, and made the present invention.

Specifically, the present invention provides an acrylic pressure-sensitive adhesive tape or sheet having a viscoelastic layer (X) containing microspheres and an acrylic polymer containing an alkyl (meth)acrylate as the principal monomer component as base polymer, and a pressure-sensitive adhesive layer (Y) formed on at least one side of the viscoelastic layer (X) by irradiation of an acrylic monomer mixture containing 2-ethylhexyl acrylate, n-butyl acrylate and acrylic acid, or its prepolymer, with active energy ray, wherein acrylic acid is contained in the acrylic monomer mixture forming the pressure-sensitive adhesive layer (Y) or a prepolymer of the acrylic monomer mixture in an amount of 6 to 12 wt % with respect to all monomer components and n-butyl acrylate, in an amount of 35 to 65 wt % with respect to the total amount of 2-ethylhexyl acrylate and n-butyl acrylate.

The amount of the photopolymerization initiator in the acrylic monomer mixture or a prepolymer of the acrylic monomer mixture is preferably 0.001 to 5 wt parts with respect to 100 wt parts of the all monomer components.

The microspheres are preferably hollow glass balloons. The viscoelastic layer (X) is preferably a layer obtained by irradiation of a viscoelastic composition containing microspheres, a (meth) acrylic ester as principal monomer component and a photopolymerization initiator with active energy ray.

The acrylic pressure-sensitive adhesive tape or sheet is used in application for adhesion to automotive coatings. In particular, it is used favorably to coatings having a silicone-based surface control agent bleeding thereon and coatings having an acrylic surface control agent bleeding thereon.

The present invention also provides a method of producing an acrylic pressure-sensitive adhesive tape or sheet, characterized by forming a pressure-sensitive adhesive layer (Y), by irradiation of an acrylic monomer mixture containing 2-ethylhexyl acrylate, n-butyl acrylate and acrylic acid or a prepolymer of the acrylic monomer mixture with active energy ray, at least on one side of a viscoelastic layer (X) containing microspheres and an acrylic polymer having an (meth)acrylic ester as the principal monomer component as the base polymer, wherein acrylic acid is contained in an amount of 6 to 12 wt % with respect to all monomer components and n-butyl acrylate in an amount of 35 to 65 wt % with respect to the total amount of 2-ethylhexyl acrylate and n-butyl acrylate in the acrylic monomer mixture forming the pressure-sensitive adhesive layer (Y) or a prepolymer of the acrylic monomer mixture.

Effects of the Invention

The acrylic pressure-sensitive adhesive sheet according to the present invention in such a configuration is highly adhesive to hard-to-adhere adherends such as coatings having the surface control agent bleeding thereon. In addition, the sheet can be highly adhesive, irrespective of whether the surface control agent is high or low polar. It can also be used favorably in application for adhesion to automotive coatings.

Best Mode for Carrying Out the Invention

[Acrylic pressure-sensitive adhesive sheet]

The acrylic pressure-sensitive adhesive sheet (acrylic adhesive sheet) according to the present invention is an acrylic pressure-sensitive adhesive sheet having a pressure-sensitive adhesive layer (Y) [adhesive layer (Y)] formed by irradiation of active energy ray on an acrylic pressure-sensitive adhesive composition, at least on one side of a viscoelastic layer (X) containing microspheres and an acrylic polymer containing an alkyl (meth)acrylate as the principal monomer component as the base polymer. Thus, the acrylic pressure-sensitive adhesive sheet according to the present invention is not limited in its shape or the like as long as the viscoelastic layer (X) has pressure-sensitive adhesive layer(s) (Y) on one or both sides. The viscoelastic layer (X) may or may not be tacky (adhesive). The acrylic pressure-sensitive adhesive composition is a composition containing an acrylic monomer mixture or a prepolymer of the acrylic monomer mixture.

The acrylic pressure-sensitive adhesive composition contains 2-ethylhexyl acrylate, n-butyl acrylate, acrylic acid and a photopolymerization initiator, and more specifically, it contains acrylic acid in an amount of 6 to 12 wt % with respect to all monomer components in the acrylic pressure-sensitive adhesive composition, 2-ethylhexyl acrylate and n-butyl acrylate in an amount of 20 to 94 wt % with respect to all monomer components in the acrylic pressure-sensitive adhesive composition, and n-butyl acrylate in an amount of 35 to 65 wt % with respect to the total amount of 2-ethylhexyl acrylate and n-butyl acrylate. The acrylic pressure-sensitive adhesive composition normally contains a photopolymerization initiator in an amount of 0.001 to 5 wt parts with respect to 100 wt parts of all monomer components in the acrylic pressure-sensitive adhesive composition.

Such an acrylic pressure-sensitive adhesive sheet may be in the shape of a double-faced pressure-sensitive adhesive sheet (double-faced adhesive sheet) having adhesive faces (tacky faces) on both sides or in the shape of a single-faced pressure-sensitive adhesive sheet (single-faced adhesive sheet) having an adhesive face only on one side.

Specifically, the shape of the acrylic pressure-sensitive adhesive sheet according to the present invention is, for example, (1) a double-faced pressure-sensitive adhesive sheet (double-faced adhesive sheet) comprising an adhesive viscoelastic layer (X) and a pressure-sensitive adhesive layer (Y) formed on one side thereof, (2) a double-faced pressure-sensitive adhesive sheet comprising a viscoelastic layer (X) and pressure-sensitive adhesive layers (Y) formed on both sides thereof, (3) a double-faced pressure-sensitive adhesive sheet comprising a viscoelastic layer (X), an pressure-sensitive adhesive layer (Y) formed on one side thereof and a pressure-sensitive adhesive layer other than the pressure-sensitive adhesive layer (Y) formed on the other side, (4) a single-faced pressure-sensitive adhesive sheet comprising a non-adhesive viscoelastic layer (X) and a pressure-sensitive adhesive layer (Y) formed on one side thereof, or the like.

When the acrylic pressure-sensitive adhesive sheet according to the present invention is in the shape of a double-faced pressure-sensitive adhesive sheet, the monomer components in the compositions forming the layers on the pressure-sensitive adhesive faces may be the same as or different from each other.

The pressure-sensitive adhesive layer other than the pressure-sensitive adhesive layer (Y) can be formed, for example, by a known method of forming a pressure-sensitive adhesive layer by using a known adhesive (e.g., acrylic pressure-sensitive adhesive, rubber-based pressure-sensitive adhesive, vinyl alkylether-based pressure-sensitive adhesive, silicone-based pressure-sensitive adhesive, polyester-based pressure-sensitive adhesive, polyamide-based pressure-sensitive adhesive, urethane-based pressure-sensitive adhesive, fluorine-based pressure-sensitive adhesive, or epoxy-based pressure-sensitive adhesive). The thickness of the pressure-sensitive adhesive layer other than the pressure-sensitive adhesive layer (Y) is not particularly limited, and may be chosen properly according to application and using method.

The acrylic pressure-sensitive adhesive sheet according to the present invention may have a release film (separator) for example for protection of the pressure-sensitive adhesive face. In addition, it may also have other layers (e.g., intermediate layer, undercoat layer, or the like), in the range that does not impair the advantageous effects of the invention.

The intermediate layer is, for example, one or more intermediate layers formed between the viscoelastic layer (X) and the pressure-sensitive adhesive layer (Y). Examples of such intermediate layers include a parting agent-coated layer for improvement in releasability, an undercoat agent-coated layer for improvement in adhesion force, a layer for improvement in deforming efficiency, a layer for expansion of the adhesion area to the adherend, a layer for improvement in adhesive strength to the adherend, a layer for improvement in compatibility to the surface shape of the adherend, a layer for improvement in the heat-processability for reduction in adhesive strength, a layer for improvement in releasability after heating, and the like.

The acrylic pressure-sensitive adhesive sheet according to the present invention may be prepared, in the form of roll as it is wound or in the stacked form as the sheets thereof are stacked. Thus, the acrylic pressure-sensitive adhesive sheet according to the present invention can have a sheet- or tape-like shape. If the acrylic pressure-sensitive adhesive sheet is in the state or shape as it is wound around a roll, it may be wound in the state or shape wound around a roll, while the adhesive face is protected with a release film (separator), or in the state or shape wound around a roll as the adhesive face is protected with a release coating layer (backing layer) formed on the other face of a carrier. Examples of the release coating agents (parting agent), used in forming a release coating layer (backing layer) on the face of the carrier include silicone-based parting agents, long-chain-alkyl parting agents and the like.

[Pressure-sensitive adhesive layer (Y)]

The pressure-sensitive adhesive layer (Y) is a layer obtained by photocuring (photopolymerization) caused by irradiation of active energy ray on the acrylic pressure-sensitive adhesive composition, and the pressure-sensitive adhesive layer adheres effectively to hard-to-adhere adherends such as coatings having the surface control agent bleeding thereon.

As for the mechanism of the operational advantage that the pressure-sensitive adhesive face of the pressure-sensitive adhesive layer (Y) has high adhesive strength even to the surface having the surface control agent bleeding thereon, the high-polar surface control agent is compatible with the acrylic acid monomer unit and the low-polar surface control agent is compatible with the n-butyl acrylate monomer and 2-ethylhexyl acrylate monomer units, and thus, the surface control agents are absorbed into the pressure-sensitive adhesive layer (Y) simultaneously, preventing formation of a coating surface layer low in cohesive force, and thereby allowing generation and preservation of tighter adhesion state.

The high-polar surface control agent is a surface control agent having a SP value, a solubility parameter as determined by Fedors method, of 20.5 $(MPa)^{1/2}$ or more [for example, 20.5 or more to less than 30.7 $(MPa)^{1/2}$, preferably 20.5 or more to less than 26.6 $(MPa)^{1/2}$], and the low-polar surface control agent, on the other hand, is a surface control agent having a SP value, a solubility parameter as determined by Fedors method, of less than 20.5 $(MPa)^{1/2}$ [for example, 16.4 or more to less than 20.5 $(MPa)^{1/2}$, preferably 18.4 or more to less than 20.5 $(MPa)^{1/2}$].

The acrylic pressure-sensitive adhesive composition contains acrylic acid in an amount of 6 to 12 wt % (preferably, 8 to 12 wt %) with respect to all monomer components, and 2-ethylhexyl acrylate and n-butyl acrylate in an amount of 20 to 94 wt % (preferably, 60 to 94 wt %) with respect to all monomer components. An acrylic acid content of less than 6 wt % may lead to deterioration in adhesive strength because of presence of a smaller amount of polar groups, while a content of more than 12 wt % may lead to generation of "stick-slip" phenomenon, because of excessive hardness of the adhesive. Alternatively, a total amount of 2-ethylhexyl acrylate and n-butyl acrylate of less than 20 wt % leads to decreased absorption of the low-polar surface control agent, possibly resulting in insufficient increase in adhesive strength, while a total amount of more than 94 wt % leads to decrease in the content of acrylic acid to an amount of less than 6 wt % with respect to all monomer components, possibly resulting in decrease in adhesive strength because of presence of a smaller amount of polar groups.

The "stick-slip" phenomenon is a phenomenon that the adhesive composition loses and regains its original adhesiveness repeatedly at a particular velocity during measurement of adhesive strength (during high-speed separation).

2-Ethylhexyl acrylate and n-butyl acrylate are contained in the acrylic pressure-sensitive adhesive composition at the rates described above, but n-butyl acrylate is contained in an amount of 35 to 65 wt % (preferably, 45 to 55 wt %) with respect to the total amount of 2-ethylhexyl acrylate and n-butyl acrylate in the acrylic pressure-sensitive adhesive composition. If the content of n-butyl acrylate is less than 35 wt % with respect to the total amount of 2-ethylhexyl acrylate and n-butyl acrylate, it may lead to decrease in absorption capacity to the low-polar surface control agent, while a content thereof is more than 65 wt % with respect to the total amount of 2-ethylhexyl acrylate and n-butyl acrylate may lead to increase in elastic modulus at room temperature and also excessive hardening of the composition, because of high glass transition temperature of the n-butyl acrylate, possibly causing the "stick-slip" phenomenon.

The photopolymerization initiator is not particularly limited, and examples thereof for use include ketal-based photopolymerization initiators, $\alpha$-hydroxyketone-based photopolymerization initiators, $\alpha$-aminoketone-based photopolymerization initiators, acylphosphine oxide-based photopolymerization initiators, benzophenone-based photopolymerization initiators, thioxanthone-based photopolymerization initiators, benzoin ether-based photopolymerization initiators, acetophenone-based photopolymerization initiators, aromatic sulfonyl chloride-based photopolymerization initiators, photoactive oxime-based photopolymerization initiators, benzoin-based photopolymerization initiators, benzyl-based photopolymerization initiators and the like.

Typical examples of the ketal-based photopolymerization initiators include 2,2-dimethoxy-1,2-diphenylethan-1-one (trade name: "Irgacure 651", produced by Chiba Specialty Chemicals Corporation) and the like. Examples of the $\alpha$-hydroxyketone-based photopolymerization initiators include 1-hydroxy-cyclohexyl-phenylketone (trade name: "Irgacure 184", produced by Chiba Specialty Chemicals Corporation), 2-hydroxy-2-methyl-1-phenyl-propan-1-one (trade name: "Darocur 1173", produced by Chiba Specialty Chemicals Corporation), 1-[4-(2-hydroxyethoxy)-phenyl]-2-hydroxy-2-methyl-1-propan-1-one (trade name: "Irgacure 2959", produced by Chiba specialty Chemicals Corporation) and the like. Examples of the $\alpha$-aminoketone-based photopolymerization initiators include 2-methyl-1-[4-(methylthio)phenyl]-2-morpholinopropan-1-one (trade name: "Irgacure 907", produced by Chiba Specialty Chemicals Corporation), 2-benzyl-2-dimethylamino-1-(4-morpholinophenyl)-butanone-1 (trade name: "Irgacure 369", produced by Chiba Specialty Chemicals Corporation) and the like. Examples of the acylphosphine oxide-based photopolymerization initiators include 2,4,6-trimethylbenzoyldiphenylphosphine oxide (trade name: "Lucirin TPO", produced by BASF AG) and the like. Examples of the benzoin ether-based photopolymerization initiators include benzoin methylether, benzoin ethylether, benzoin propylether, benzoin isopropylether, benzoin isobutylether, 2,2-dimethoxy-1,2-diphenylethan-1-one, anisole methylether and the like. Examples of the acetophenone-based photopolymerization initiators include 2,2-diethoxyacetophenone, 2,2-dimethoxy-2-phenylacetophenone, 1-hydroxycyclohexylphenylketone, 4-phenoxydichloroacetophenone, 4-t-butyl-dichloroacetophenone and the like. Examples of the aromatic sulfonylchloride-based photopolymerization initiators include 2-naphthalenesulfonylchloride and the like. Examples of the photoactive oxime-based photopolymerization initiators include 1-phenyl-1,1-propandione-2-(o-ethoxycarbonyl)-oxime and the like. Examples of the benzoin-based photopolymerization initiators include benzoin and the like. Examples of the benzyl-based photopolymerization initiators include benzyl and the like. Examples of the benzophenone-based photopolymerization initiators include benzophenone, benzoylbenzoic acid, 3,3'-dimethyl-4-methoxybenzophenone, polyvinylbenzophenone ,$\alpha$-hydroxycyclohexylphenylketone and the like. Examples of the ketal-based photopolymerization initiators include benzyldimethyl ketal and the like. Examples of the thioxanthone-based photopolymerization initiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, dodecylthioxanthone and the like.

The photopolymerization initiator is used normally in an amount of 0.001 to 5 wt parts, preferably 0.01 to 4 wt parts, more preferably 0.1 to 3 wt parts, with respect to 100 wt parts of all monomer components in the acrylic pressure-sensitive adhesive composition. The photopolymerization initiators are used alone or in combination of two or more.

The acrylic pressure-sensitive adhesive composition may contain a multifunctional (meth)acrylate blended to make the pressure-sensitive adhesive layer (Y) have preferable gel fraction. The multifunctional (meth) acrylate may be used without particular restriction, if it is a compound having at least two (meth) acryloyl groups.

Examples of such multifunctional (meth)acrylates include trimethylolpropane tri(meth)acrylate, pentaerythritol tetra(meth)acrylate, 1,2-ethylene glycol di(meth)acrylate, 1,6-hexanediol di(meth)acrylate, 1,12-dodecanediol di(meth) acrylate and the like. The multifunctional (meth)acrylates may be used alone or in combination of two or more.

The multifunctional (meth)acrylate is preferably blended in such an amount that the pressure-sensitive adhesive layer (Y) formed with the acrylic pressure-sensitive adhesive composition has a gel fraction of 45 wt % or more, more preferably 50 wt % or more. A gel fraction of less then 45 wt % may lead to deterioration in cohesive force of the pressure-sensitive adhesive layer (Y), and thus, to deterioration in holding power and adhesive strength in the shearing direction. On the other hand, excessively high gel fraction may lead to deterioration in tackiness of the pressure-sensitive adhesive layer (Y), exerting adverse effects on adhesive performance and appearance, and thus, the multifunctional (meth)acrylate is preferably blended in such an amount that the pressure-sensitive adhesive layer (Y) has a gel fraction of 99 wt % or less, and preferably 97 wt % or less.

The gel fraction of the pressure-sensitive adhesive layer (Y) is determined in the following manner: Approximately 1 g of the pressure-sensitive adhesive layer (Y) is collected, and the weight of the pressure-sensitive adhesive layer (Y) before immersion is determined accurately. The pressure-sensitive adhesive layer (Y) is then immersed in approximately 40 g of ethyl acetate for 7 days; the pressure-sensitive adhesive layer insoluble in ethyl acetate is recovered entirely, dried at 130°C for 2 hours; and the dry weight of the insoluble fraction is determined. The gel fraction is calculated from the values according to the following Formula:

$$\text{Gel fraction of pressure-sensitive adhesive layer (Y) (\%)} = (\text{Dry weight of insoluble fraction / Weight of pressure-sensitive adhesive layer (Y) before immersion}) \times 100$$

The amount of the multifunctional (meth) acrylate used is an amount giving a pressure-sensitive adhesive layer (Y) having a gel fraction in the range above, as described above, but the specific amount may vary, for example, according to the molecular weight of the polymer and the number of the functional groups therein. Normally the amount of the multifunctional (meth) acrylate used is 0.001 to 30 wt parts and preferably 0.05 to 20 wt parts with respect to 100 wt parts of all monomer components contained in the acrylic pressure-sensitive adhesive composition.

The acrylic monomer mixture is preferably adjusted to a viscosity suitable in handling for application (normally, a viscosity, as determined by type B viscometer at a measurement temperature of 25°C, of 0.3 to 40 Pa· s). For this reason, the monomer components for the acrylic monomer mixture may be polymerized preliminary (partially) to a prepolymer (partial polymer).

The prepolymer of acrylic monomer mixture may be a prepolymer obtained by preliminary polymerization of the mixture of three components: 2-ethylhexyl acrylate; n-butyl acrylate; and acrylic acid, may be a prepolymer obtained by preliminarily polymerization of two of the above 3 components, or may be a prepolymer obtained by preliminary polymerization of one of the above 3 components. The acrylic pressure-sensitive adhesive composition may contain multiple kinds of the prepolymers above. In the present invention, 2-ethylhexyl acrylate and n-butyl acrylate are preferably prepolymerized separately for absorption of both of the high- and low-polar surface control agents in the pressure-sensitive adhesive layer (Y).

In the prepolymer of the acrylic pressure-sensitive adhesive composition, the polymerization rate thereof may vary according to the polymer molecular weight in the prepolymer, but is about 2 to 40 wt %, and preferably about 5 to 20 wt %. The partial polymerization is normally carried out by irradiation with active energy ray (especially with ultraviolet ray) in the absence of oxygen.

The polymerization rate of the prepolymer is obtained by weighing approximately 0.5 g of the prepolymer accurately, drying the prepolymer at 130°C for 2 hours, weighing the dried prepolymer accurately for determination of the weight loss [weight of volatile materials (unreacted monomers)], and calculating with the obtained values according to the following Formula:

$$\text{Polymerization rate of prepolymer (\%)} = [1 - (\text{Weight loss}) / (\text{Weight of prepolymer before drying})] \times 100$$

The viscosity of the acrylic acrylic pressure-sensitive adhesive composition may be adjusted with a thickening polymer properly blended. Examples of the thickening polymers include acrylic copolymers of an alkyl (meth)acrylate ester with acrylic acid, acrylamide, acrylonitrile, acryloylmorpholine or the like; styrene butadiene rubbers (SBR); isoprene rubbers; styrene butadiene block copolymers (SBS); ethylene-vinyl acetate copolymers; acrylic rubbers; polyurethane; polyester and the like.

These thickening polymers are used in an amount of 40 wt % or less (e.g., 5 to 40 wt %) in the acrylic pressure-sensitive adhesive composition. The thickening polymers may be used alone or in combination of two or more.

The acrylic pressure-sensitive adhesive composition may contain various additives in the ranges so as that they do not inhibit photopolymerization. Examples of the additives include known or common additives such as plasticizers, softeners, fillers, pigments, and dyes.

The pressure-sensitive adhesive layer (Y) and the pressure-sensitive adhesive layers other than the pressure-sensitive adhesive layer (Y) may contain bubbles. Specifically, pressure-sensitive adhesive layer (Y) and the pressure-sensitive adhesive layer other than the pressure-sensitive adhesive layer (Y) may be pressure-sensitive adhesive layers containing bubbles (referred to as "bubble-containing pressure-sensitive adhesive layers" or "bubble-containing adhesive layers"), or pressure-sensitive adhesive layers containing no bubble (referred to as "non-bubble-containing pressure-sensitive adhesive layers" or "non-bubble-containing adhesive layers"). Thus for example, if the acrylic pressure-sensitive adhesive sheet according to the present invention is a pressure-sensitive adhesive sheet having a pressure-sensitive adhesive layer on one side of the viscoelastic layer (X), the acrylic pressure-sensitive adhesive sheet may have an bubble-containing pressure-sensitive adhesive layer on one side of the viscoelastic layer (X) or a non-bubble-containing pressure-sensitive adhesive layer on one side of the viscoelastic layer (X). Alternatively, if the acrylic pressure-sensitive adhesive sheet according to the present invention is a pressure-sensitive adhesive sheet having a pressure-sensitive adhesive layer on both sides of the viscoelastic layer (X), the acrylic pressure-sensitive adhesive sheet may have bubble-containing pressure-sensitive adhesive layers on both sides of the viscoelastic layer (X), an bubble-containing pressure-sensitive adhesive layer on one side of the viscoelastic layer (X) and a bubble-containing pressure-sensitive adhesive layer on the other side, or non-bubble-containing pressure-sensitive adhesive layers on both sides of the viscoelastic layer (X).

Incorporation of the bubbles in the pressure-sensitive adhesive layer (Y) is not particularly limited and, for example, (1) bubbles may be formed in the pressure-sensitive adhesive layer (Y) by forming the pressure-sensitive adhesive layer (Y) with an acrylic pressure-sensitive adhesive composition containing a gas component forming bubbles (referred to as "bubble-forming gas") (e.g., an inert gas, such as nitrogen, carbon dioxide or argon, or air) previously mixed (referred to as "bubble-containing acrylic pressure-sensitive adhesive composition"), or alternatively, (2) the bubbles may be formed in the pressure-sensitive adhesive layer (Y) by forming the pressure-sensitive adhesive layer (Y) with an acrylic pressure-sensitive adhesive composition containing a blowing agent. In the present invention, bubbles are incorporated preferably by the method (1) above. The blowing agent is not particularly limited, and may be selected properly, for example, from known blowing agents such as heat-expandable microspheres.

For reliable mixing and preservation of bubbles in the bubble-containing acrylic pressure-sensitive adhesive composition, bubbles are preferably blended and mixed as the last component in the acrylic pressure-sensitive adhesive composition. In addition, the viscosity of the acrylic pressure-sensitive adhesive composition before mixing of bubbles is preferably raised (e.g., to a viscosity suitable for application) upon mixing of the bubbles in the acrylic pressure-sensitive adhesive composition. The method of mixing bubbles in the acrylic pressure-sensitive adhesive composition is not particularly limited, and any known bubble mixing method may be used.

The method of forming the pressure-sensitive adhesive layer (Y) is not particularly limited, but for example, the pressure-sensitive adhesive layer (Y) is formed by a method of coating the acrylic pressure-sensitive adhesive composition on a suitable carrier, such as release film or base film, thus forming a layer of the acrylic pressure-sensitive adhesive composition, and curing the resulting layer by irradiation with active energy ray (in particular, ultraviolet ray). The layer-forming method may have a drying step additionally as needed. In addition, because the photopolymerization reaction is inhibited by oxygen in air, it is preferably to block the oxygen during curing with active energy ray (photocuring), for example by placing a release film (separator) or the like on the acrylic pressure-sensitive adhesive composition layer or by carrying out the photocuring under nitrogen atmosphere. The release film (separator) or the like that is used for preparation of the pressure-sensitive adhesive layer (Y) may be separated at a proper time in preparation of the acrylic pressure-sensitive adhesive sheet according to the present invention or may be separated when the produced acrylic pressure-sensitive adhesive sheet is used.

Examples of the active energy rays include ionizing radiation rays such as $\alpha$ ray, $\beta$ ray, $\gamma$ ray, neutron beam, electron beam; ultraviolet ray; and the like, and in particular, ultraviolet ray is preferable. For example, the irradiation energy and the irradiation period of the active energy ray are not particularly limited as long as they are suitable for activation of the photopolymerization initiator and induction of the reaction between monomer components. As for the light intensity of the active energy ray, an ultraviolet ray with light intensity of approximately 400 to 4000 mJ/cm$^2$, which corresponds to an illuminance of 1 to 200 mW/cm$^2$ at a wavelength of 300 to 400 nm, is exemplified.

When the pressure-sensitive adhesive layer (Y) is formed by irradiation of active energy ray on the acrylic pressure-sensitive adhesive composition, the polymerization rate of pressure-sensitive adhesive layer (Y) is preferably 90 wt % or more. The unreacted monomer can be removed in normal drying step. The polymerization rate of the pressure-sensitive adhesive layer (Y) can be calculated by a method similar to that for the polymerization rate of the partial polymer described above.

The thickness of the pressure-sensitive adhesive layer (Y) is determined properly as needed, but for example, approximately 10 $\mu$m to 5 mm, preferably 50 $\mu$m to 3 mm, and more preferably 100 $\mu$m to 2 mm, from the point of assuring preferable adhesion strength. The pressure-sensitive adhesive layer (Y) may have a single-layered or multi-layered laminate shape.

[Viscoelastic layer (X)]

The viscoelastic layer (X) contains at least microspheres and an acrylic polymer containing an (meth) acrylic ester as the principal monomer component as the base polymer. The viscoelastic layer (X) is normally prepared by polymerizing a composition containing at least an acrylic monomer for the acrylic polymer as base polymer and microspheres (referred to as "viscoelastic composition"). The base polymer for the viscoelastic layer (X) may be the same as that for the pressure-sensitive adhesive layer (Y).

The viscoelastic layer (X) contains an acrylic polymer as the base polymer and may have one of more of the base polymers for various known pressure-sensitive adhesives other than the acrylic polymer (e.g., rubber-based polymers, vinyl alkylether-based polymers, silicone-based polymers, polyester-based polymers, polyamide-based polymers, urethane-based polymers, fluorochemical polymers, epoxy-based polymers and the like) additionally in the range that does not impair the advantageous effects of the present invention.

The acrylic polymer is a polymer containing an alkyl (meth)acrylate as the principal monomer component. Examples of the alkyl (meth)acrylate used as the principal monomer component for the acrylic polymer include alkyl (meth)acrylates having an alkyl group having a carbon number of 1 to 20 such as methyl (meth)acrylate, ethyl (meth) acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, pentyl (meth)acrylate, isopentyl (meth)acrylate, hexyl (meth)acrylate, heptyl (meth) acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate (preferably, those having an alkyl group having a carbon number of 2 to 14, and more preferably those having an alkyl group having a carbon number of 2 to 10). The alkyl (meth)acrylates are used alone or in combination of two or more.

Alternatively, (meth)acrylates other than the alkyl (meth)acrylates above include, for example, alicyclic hydrocarbon group-containing (meth)acrylates such as cyclopentyl (meth)acrylate, cyclohexyl (meth)acrylate and isobony (meth)acrylate and the like.

The alkyl (meth)acrylate, which is used as the principal monomer component for the acrylic polymer, is preferably contained in an amount of 60 wt % or more, and preferably 80 wt % or more with respect to the total amount of the monomer components for the acrylic polymer.

In the acrylic polymer above, various copolymerizable monomers such as polar group-containing monomers and polyfunctional monomers may be used as the monomer components. Use of a copolymerizable monomer as the monomer component can improve the properties of the base film such as elasticity and flexibility in the viscoelastic layer (X). The copolymerizable monomers may be used alone or in combination of two or more.

Examples of the polar group-containing monomers include carboxyl group-containing monomers such as acrylic acid, methacrylic acid, carboxyethyl (meth)acrylate, carboxypentyl (meth)acrylate, itaconic acid, maleic acid, fumaric acid, crotonic acid and isocrotonic acid, or the anhydrides thereof (such as maleic anhydride); hydroxyl group-containing monomers such as 2-hydroxyethyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate and (4-hydroxymethylcyclohexyl)-methyl acrylate; sulfonic acid group-containing monomer such as 2-acrylamido-2-methylpropanesulfonic acid and sulfopropyl acrylate; phosphoric acid group-containing monomers such as 2-hydroxyethyl acryloyl phosphate; amide group-containing monomers such as (meta)acrylamide, N.N-dimethyl(meta) acrylamide, N-methylol (meta)acrylamide, N-methoxymethyl(meta)acrylamide, and N-butoxymethyl(meta)acrylamide; amino-group-containing monomers such as aminoethyl (meth)acrylate, dimethylaminoethyl (meth)acrylate and t-butylaminoethyl (meth)acrylate; glycidyl group-containing monomers such as glycidyl (meth)acrylate, and methylglycidyl (meth)acrylate; cyanoacrylate-based monomers such as acrylonitrile and meta acrylonitrile; heterocyclic ring-containing vinyl monomers such as N-vinyl-2-pyrrolidone, (meth)acryloylmorpholine, N-vinylpyridine, N-vinylpiperidone, N-vinylpyrimidine, N-vinylpiperazine, N-vinylpyrazine, N-vinylpyrrole, N-vinylimidazole, and N-vinyloxazole, and the like. The polar group-containing monomer is preferably a carboxyl group-containing monomer such as acrylic acid or methacrylic acid or the anhydride thereof. Such polar group-containing monomers may be used alone or in combination of two or more.

The amount of the polar group-containing monomer used is 30 wt % or less (e.g., 1 to 30 wt %), and preferably 3 to 20 wt % with respect to the total amount of the monomers for the acrylic polymer. A polar group-containing monomer content of more than 30 wt % leads, for example, to deterioration in flexibility of the viscoelastic layer (X) in the pressure-sensitive adhesive sheet, possibly resulting in deterioration in adhesiveness to irregular-surfaced adherends. On the other hand, excessively low polar group-containing monomer amount (e.g., less than 1 wt % with respect to the total amount of the monomer components for the acrylic polymer) leads to deterioration in cohesive force of the viscoelastic layer (X), possibly resulting in deterioration in holding property of the pressure-sensitive adhesive sheet, and also in processability when the pressure-sensitive adhesive sheet is processed (e.g., during cutoff and punching).

Examples of the polyfunctional monomers include hexanediol (meth)acrylate, polyethylene glycol di(meth)acrylate, polypropylene glycol di(meth)acrylate, neopentylglycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, urethane acrylate, dibutyl (meth)acrylate, hexidyl (meth)acrylate and the like.

The amount of the polyfunctional monomer used is 2 wt % or less (e.g., 0.01 to 2 wt %), preferably 0.02 to 1 wt % with respect to the total amount of the monomers for the acrylic polymer. A polyfunctional monomer content of more than 2 wt % leads, for example, to deterioration in flexibility of the viscoelastic layer (X) in the pressure-sensitive adhesive sheet, possibly resulting in deterioration in adhesiveness to irregular-surfaced adherends. On the other hand, excessively low polyfunctional monomer content (e.g., less than 0.01 wt % with respect to the total amount of the monomer components for the acrylic polymer) leads to deterioration in cohesive force of the viscoelastic layer (X), possibly resulting in deterioration in holding property of the pressure-sensitive adhesive sheet and also in processability when the pressure-sensitive adhesive sheet is processed (e.g., during cutoff and punching).

Alternatively, copolymerizable monomers other than the polar group-containing monomers and the polyfunctional monomers include, for example, vinyl esters such as vinyl acetate and vinyl propionate; aromatic vinyl compounds such as styrene and vinyltoluene; olefins or dienes such as ethylene, butadiene, isoprene and isobutylene; vinyl ethers such as vinyl alkylethers; vinyl chloride; alkoxyalkyl (meth)acrylate-based monomers such as methoxyethyl (meth)acrylate and ethoxyethyl (meth)acrylate; sulfonic acid group-containing monomers such as sodium vinylsulfonate; phosphate group-containing monomers such as 2-hydroxyethylacryloyl phosphate; imide group-containing monomers such as cyclohexylmaleimide and isopropylmaleimide; isocyanate group-containing monomers such as 2-methacryloyloxyethyl isocyanate; fluorine atom-containing (meth)acrylates; silicon atom-containing (meth)acrylates, and the like.

The acrylic polymer, base polymer for the viscoelastic layer (X), can be prepared by any known polymerization method (e.g., solution polymerization, emulsion polymerization, or bulky polymerization), but use of a curing reaction by irradiation with active energy ray in the presence of a photopolymerization initiator (photoinitiator) is preferable. Thus, the viscoelastic composition for the viscoelastic layer (X) in the present invention may contain a photopolymerization initiator. Presence of a photopolymerization initiator in this way enables curing by active energy ray and simultaneous production of a pressure-sensitive adhesive layer (Y) and a viscoelastic layer (X). The polymerization initiators may be used alone or in combination of two or more.

The photopolymerization initiator is not particularly limited, and example thereof include ketal-based photopolymerization initiators, $\alpha$-hydroxyketone-based photopolymerization initiators, $\alpha$-aminoketone-based photopolymerization initiators, acylphosphine oxide-based photopolymerization initiators, benzophenone-based photopolymerization initiators, thioxanthone-based photopolymerization initiators, benzoin ether-based photopolymerization initiators, acetophenone-based photopolymerization initiators, aromatic sulfonylchloride-based photopolymerization initiators, photoactive oxime-based photopolymerization initiator, benzoin-based photopolymerization initiators, benzyl-based photopolymerization initiators, and the like.

Specific examples of the ketal-based photopolymerization initiators include 2,2-dimethoxy-1,2-diphenylethan-1-one (trade name: "Irgacure 651", produced by Chiba Specialty Chemicals Corporation) and the like. Examples of the $\alpha$-hydroxyketone-based photopolymerization initiators include 1-hydroxy-cyclohexyl-phenylketone (trade name: "Irgacure 184", produced by Chiba Specialty Chemicals Corporation), 2-hydroxy-2-methyl-1-phenyl-propan-1-one (trade name: "Darocur 1173", produced by Chiba Specialty Chemicals Corporation), 1-[4-(2-hydroxyethoxy)-phenyl]-2-hydroxy-2-methyl-1-propan-1-one (trade name: "Irgacure 2959", produced by Chiba Specialty Chemicals Corporation) and the like. Examples of the $\alpha$-aminoketone-based photopolymerization initiators include 2-methyl-1-[4-(methylthio)phenyl]-2-morpholinopropan-1-one (trade name: "Irgacure 907", produced by Chiba Specialty Chemicals Corporation), 2-benzyl-2-dimethylamino-1-(4-morpholinophenyl)-butanone-1 (trade name: "Irgacure 369", produced by Chiba Specialty Chemicals Corporation) and the like. Examples of the acylphosphine oxide-based photopolymerization initiators include 2,4,6-trimethylbenzoyldiphenylphosphineoxide (trade name: "Lucirin-TPO" produced by BASF AG) and the like. Examples of the benzoin ether-based photopolymerization initiators include benzoin methylether, benzoin ethylether, benzoin propylether, benzoin isopropylether, benzoin isobutylether, 2,2-dimethoxy-1,2-diphenyl ethan-1-one, anisole methylether, and the like. Examples of the acetophenone-based photopolymerization initiators include 2,2-diethoxyacetophenone, 2,2-dimethoxy-2-phenylacetophenone, 1-hydroxycyclohexylphenylketone, 4-phenoxydichloroacetophenone, 4-t-butyl-dichloroacetophenone, and the like. Examples of the aromatic sulfonylchloride-based photopolymerization initiators include 2-naphthalenesulfonylchloride, and the like. Examples of the photoactive oxime-based photopolymerization initiators include 1-phenyl-1,1-propandione-2-(o-ethoxycarbonyl)-oxime, and the like. Examples of the benzoin-based photopolymerization initiators include benzoin and the like. Examples of the benzyl-based photopolymerization initiators include benzyl and the like. Examples of the benzophenone-based photopolymerization initiator include benzophenone, benzoylbenzoic acid, 3,3'-dimethyl-4-methoxybenzophenone, polyvinylbenzophenone, $\alpha$-hydroxycyclohexylphenylketone and the like. Examples of the ketal-based photopolymerization initiator include benzyldimethyl ketal and the like. Examples of the thioxanthone-based photopolymerization initiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, dodecylthioxanthone and the like.

The amount of the photopolymerization initiator used is 0.01 to 5 wt parts (preferably, 0.05 to 3 wt parts), with respect to 100 wt parts of all monomer components in the viscoelastic composition for the viscoelastic layer (X).

For activation of the photopolymerization initiator, it is important to irradiate the viscoelastic composition with an active energy ray. Examples of such active energy rays include ionizing radiation rays such as $\alpha$ ray, $\beta$ rays, $\gamma$ ray, neutron beam, electron beam; ultraviolet ray; and the like, and in particular, ultraviolet ray is preferable. For example, the irradiation energy and the exposure period of the active energy ray are not particularly limited as long as they are suitable for activation of the photopolymerization initiator and induction of the reaction between monomer components.

The viscoelastic composition for the viscoelastic layer (X) according to the present invention may contain a thermal polymerization initiator. Examples of the thermal polymerization initiators include azo-based thermal polymerization initiators such as 2,2'-azobisisobutylonitrile, 2,2'-azobis-2-methylbutylonitrile, dimethyl 2,2'-azobis(2-methylpropionate), 4,4'-azobis-4-cyanovalerianic acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, and 2,2'-azobis(N,N'-dimethyleneisobutylamidine) dihydrochloride; peroxide-based thermal polymerization initiators such as dibenzoyl peroxide and tert-butyl permaleate; redox thermal polymerization initiators, and the like. The amount of the thermal polymerization initiator used is not particularly limited as long as it is in the range traditionally used for thermal polymerization initiators.

The microspheres are one of the components for the viscoelastic layer (X), and presence of the microspheres in the viscoelastic layer (X) leads, for example, to improvement in shearing adhesive strength and also in processability of the acrylic pressure-sensitive adhesive sheet according to the present invention. The microspheres may be used alone or in combination of two or more.

The microsphere is not particularly limited as long as the shape is spherical, and examples thereof include metal particles such as of copper, nickel, aluminum, chromium, iron, and stainless steel, and metal oxide particles thereof; carbide particles such as of silicon carbide, boron carbide and nitrogen carbide; nitride particles such as of aluminum nitride, silicon nitride and boron nitride; ceramic particles represented by oxides such as alumina and zirconium; inorganic fine particles such as of calcium carbide, aluminum hydroxide, glass, and silica; natural raw particles such as volcanic Shirasu and sand; polymer particles such as of polystyrene, polymethyl methacrylate, phenol resins, benzoguanamine resins, urea resins, silicone resins, nylon, polyester, polyurethane, polyethylene, polypropylene, polyamide, polyimide, and the like.

The microspheres for use may be hollow microspheres or dense microspheres. Specific examples of the hollow inorganic microspheres include hollow balloons of glass such as hollow glass balloon; hollow metal compound balloons such as hollow alumina balloon; hollow balloons of ceramic such as hollow ceramic balloons, and the like. Examples of the hollow organic microspheres include hollow resin balloons such as hollow acrylic balloon and hollow vinylidene chloride balloon, and the like.

Examples of the hollow glass balloons commercially available include "Glass Microballoons" (trade name, manufactured by Fuji Silysia Chemical Ltd.); "CEL-STAR Z-25", "CEL-STAR Z-27", "CEL-STAR CZ-31TJ", "CEL-STAR Z-36", "CEL-STAR Z-39", "CEL-STAR T-36", "CEL-STAR SX-39" and "CEL-STAR PZ-6000" (trade names, manufactured by Tokai Kogyo Co., Ltd.); "Silax Fine Balloons" (trade name, manufactured by Fine Balloons Ltd.), and the like.

Examples of the dense glass balloons commercially available include "SUNSPHERE NP-100" (trade name, manufactured by Asahi Glass Co., Ltd.); "Micro Glass Beads EMB-20" and "Glass Beads EGB-210" (trade names, manufactured by Potters-Ballotini Co., Ltd.), and the like.

Among the microspheres above, use of hollow inorganic microspheres is preferable, and use of hollow glass balloons is more preferable, for example, from the viewpoints of the polymerization efficiency with active energy ray (in particular, ultraviolet ray) and the weight of the composition. Use of the hollow glass balloons allows improvement in adhesive strength at high temperature, without any deterioration in other properties such as shearing force and holding power.

The particle diameter (average particle diameter) of the microspheres is not particularly limited, and may be selected, for example in the range of 1 to 500 $\mu$m (preferably 5 to 200 $\mu$m, and more preferably 10 to 100 $\mu$m).

The specific gravity of the microspheres is not particularly limited, and may be selected, for example, in the range of 0.1 to 0.8 g/cm$^3$ (preferably 0.12 to 0.5 g/cm$^3$). When the microspheres have a specific gravity of less than 0.1 g/cm$^3$, the microspheres float significantly when they are blended and mixed with the viscoelastic composition, which makes it difficult to disperse the microspheres uniformly, while the microspheres having a specific gravity of more than 0.8 g/cm$^3$ are more expensive and leads to cost expansion.

The amount of the microspheres used is not particularly limited, and can be selected, for example, in the range of 5 to 50 vol %, preferably 10 to 45 vol %, more preferably 15 to 40 vol %, with respect to the entire volume of the viscoelastic layer (X) formed with the viscoelastic composition. When the microspheres are used in an amount of less than 5 vol %, the advantageous effects observed by addition of the microspheres may diminish, while a content of more than 50 vol % may lead to deterioration in adhesive strength of the viscoelastic layer (X).

The viscoelastic layer (X) in the acrylic pressure-sensitive adhesive sheet according to the present invention may contain bubbles, in addition to the microspheres described above and others. Presence of the bubbles in the viscoelastic layer (X) is advantageous for improvement in cushioning property and adhesiveness.

The method of forming bubbles in the viscoelastic layer (X) is not particularly limited, and, for example, (1) bubbles may be formed by forming a viscoelastic layer (X) with a viscoelastic composition containing a bubble-forming gas (referred to as "bubble-containing viscoelastic composition"), or (2) bubbles may be formed by forming a viscoelastic layer (X) with a viscoelastic composition containing a blowing agent. In the present invention, the viscoelastic layer (X) containing mixed bubbles (referred to as "bubble-containing viscoelastic layer (X)") is preferably formed by the method (1) above. The blowing agent is not particularly limited, and can be selected properly, for example, from known blowing agents such as heat-expandable microspheres.

The amount of the bubbles possibly contained in the viscoelastic layer (X) can be selected properly in the range that does not impair the properties such as elasticity and flexibility, and is, for example, 5 to 50 vol %, preferably 10 to 40 vol %, more preferably 12 to 30 vol %, with respect to the volume of the viscoelastic layer (X). A content of less than 5 vol % often leads to insufficient stress relaxation efficiency and inferior repulsion resistance characteristics. Alternatively, a content of more than 50 vol % often leas to generation of large bubbles penetrating the viscoelastic layer (X), thus to deterioration in adhesive performance and appearance, and additionally, to excessive softening of the viscoelastic layer (X), which may in turn leads to deterioration in shearing force.

The bubbles contained as mixed in the viscoelastic layer (X) are preferably, fundamentally independent bubbles, but there may be independent bubbles and semi-independent bubbles at the same time.

Such a bubble normally has a spherical shape, but may have an irregular spherical shape. The average bubble diameter (diameter) of the bubble is not particularly limited, and can be selected, for example, in the range of 1 to 1000 μm (preferably 10 to 500 μm, more preferably 30 to 300 μm).

The bubble component contained in the bubbles (bubble-forming gas component; referred to as "bubble-forming gas") is not particularly limited, and various gas components such as inert gases such as nitrogen, carbon dioxide and argon, and air can be used. If the composition is subjected, for example, to polymerization reaction after the bubble-forming gas is mixed, it is important that the bubble-forming gas used does not inhibit the reaction. The bubble-forming gas is preferably nitrogen, from the viewpoints of reaction inhibition and cost effectiveness.

The viscoelastic layer (X) in the acrylic pressure-sensitive adhesive sheet according to the present invention preferably contains a fluorochemical surfactant blended in addition to the polymer component and the microspheres for viscoelasticity. Use of a surfactant having a particular structure in the molecule leads to decrease in adhesiveness and friction and to increase in stress dispersion between the microspheres and the polymer in the viscoelastic layer (X), which in turn leads to improvement in aggregation strength of the viscoelastic composition and adhesiveness thereof to irregular face at the same time, thus giving a viscoelastic layer (X) superior in the balance between adhesive strength and shearing strength.

The fluorochemical surfactant for use is a fluorochemical surfactant having an oxy-$C_{2-3}$-alkylene group and a fluorinated hydrocarbon group in the molecule. The oxy-$C_{2-3}$-alkylene group is represented by the following Formula: -R-O- (wherein, R represents a straight- or branched-chain alkylene group having a carbon number of 2 or 3). Presence of an oxy-$C_{2-3}$-alkylene group in the molecule reduces the degree of adhesion and the frictional resistance between the microspheres and the base polymer and increases the stress dispersion. Thus if the viscoelastic layer (X) is formed by using a viscoelastic composition containing a fluorochemical surfactant, the viscoelastic layer (X) in the acrylic pressure-sensitive adhesive sheet according to the present invention has high adhesiveness. Presence of the fluorinated hydrocarbon group also leads to improvement in bubble-mixing efficiency and bubble stability, in addition to reduction, for example, of the frictional resistance. The fluorochemical surfactant is not particularly limited as long as it has an oxy-$C_{2-3}$-alkylene group and a fluorinated hydrocarbon group, but is preferably a nonionic surfactant from the viewpoint of dispersion efficiency in the base polymer. In addition, the fluorochemical surfactant may have an oxyethylene group (-$CH_2CH_2O$-), an oxypropylene group [-$CH_2CH(CH_3)O$-] or the like, or alternatively two or more of them in the molecule. The fluorochemical surfactants may be used alone or in combination of two or more.

The fluorinated hydrocarbon group is not particularly limited, but preferably a perfluoro group, and the perfluoro group may be monovalent, bivalent, or higher. The fluorinated hydrocarbon group may have a double bond or a triple bond, and may have a linear, branched, or a cyclic structure. The number of carbons in the fluorinated hydrocarbon group is not particularly limited, but is 1, 2 or more, preferably 3 to 30, and more preferably 4 to 20. One or more of these fluorinated hydrocarbon groups are introduced into the surfactant molecule. The oxy-$C_{2-3}$-alkylene group may be either an alcohol having a hydrogen atom bound to the terminal oxygen atom, an ether having another hydrocarbon group bound thereto, an ester having another hydrocarbon group bound thereto via a carbonyl group, or the like. It may alternatively be a cyclic compound, such as cyclic ether or lactone, having such a structure in part of the cyclic structure.

The structure of the fluorochemical surfactant is not particularly limited, but, for example, a copolymer prepared from an oxy-$C_{2-3}$-alkylene group-containing monomer and a fluorinated hydrocarbon group-containing monomer as monomer components is used preferably. Such a copolymer may have various structures such as block copolymer or graft copolymer, but the copolymer in any structure is used preferably.

Examples of the block copolymers (copolymers having oxy-$C_{2-3}$-alkylene groups and fluorinated hydrocarbon groups in the main chain) include polyoxyethylene perfluoroalkylethers, polyoxyethylene perfluoroalkylates, polyoxypropylene perfluoroalkylethers, polyoxyisopropylene perfluoroalkylethers, polyoxyethylene sorbitan perfluoroalkylates, polyoxyethylene polyoxypropylene block copolymer perfluoroalkylates, polyoxyethylene glycol perfluoroalkylates and the like.

Examples of the graft copolymers (copolymer having oxy-$C_{2-3}$-alkylene groups and fluorinated hydrocarbon groups on the side chains) include copolymers containing, as the monomer component, a vinyl compound having at least a polyoxyalkylene group or a fluorinated hydrocarbon group, and in particular, acrylic copolymers are used preferably. Examples of the polyoxyalkylene group-containing vinyl compounds include polyoxyalkylene (meth)acrylates such as polyoxyethylene (meth)acrylate, polyoxypropylene (meth)acrylate and polyoxyethylene polyoxypropylene (meth)acrylate. Examples of the fluorinated hydrocarbon group-containing vinyl compounds include fluorinated hydrocarbon-containing (meth)acrylic esters including perfluoroalkyl (meth)acrylates such as perfluorobutyl (meth)acrylate, perfluoroisobutyl (meth)acrylate and perfluoropentyl (meth)acrylate.

The fluorochemical surfactant may have a structure such as alicyclic hydrocarbon group or aromatic hydrocarbon group in the molecule, in addition to the structures above, and may have various functional groups such as carboxyl group, sulfonic acid group, cyano group, amide group, and amino group additionally in the range that does not inhibit dispersion thereof into the base polymer. For example, if the fluorochemical surfactant is a vinyl copolymer, a monomer component copolymerizable with the polyoxyalkylene group-containing vinyl compound and the fluorinated hydrocarbon group-containing vinyl compound may be used as the monomer component. These monomers may be used alone or in combination of two or more.

Examples of the copolymerizable monomer components preferably used include (meth)acrylic acid $C_{1-20}$ alkyl esters such as undecyl (meth)acrylate and dodecyl (meth)acrylate; alicyclic hydrocarbon group-containing (meth)acrylic esters such as cyclopentyl (meth)acrylate; aromatic hydrocarbon group-containing (meth)acrylic esters such as phenyl (meth)acrylate. Other examples include carboxyl group-containing monomers such as maleic acid and crotonic acid; sulfonic acid group-containing monomers such as sodium vinylsulfonate; aromatic vinyl compounds such as styrene and vinyltoluene; olefins or dienes such as ethylene and butadiene; vinyl ethers such as vinyl alkylether; amide group-containing monomers such as acrylamide; amino group-containing monomers such as (meth)acryloylmorpholine; glycidyl group-containing monomers such as methyl (meth)acrylate glycidyl; isocyanate group-containing monomers such as 2-methacryloyloxyethyl isocyanate and the like. Yet alternatively, polyfunctional copolymerizable monomers (multifunctional monomers) such as dipentaerythritol hexa(meth)acrylate and divinylbenzene may be used.

The molecular weight of the fluorochemical surfactant is not particularly limited, but the surfactant having a weight-average molecular weight of less than 20000 (e.g., 500 or more and less than 20000) is highly effective in reducing the adhesiveness and the frictional resistance between the base polymer and the microspheres. Combined use of a fluorochemical surfactant having a weight-average molecular weight of 20000 or more (e.g., 20000 to 100000, preferably 22000 to 80000, more preferably 24000 to 60000) improves the mixing efficiency of bubbles and the stability of the mixed bubbles.

Specific examples of the fluorochemical surfactants having oxy-$C_{2-3}$-alkylene groups and fluorinated hydrocarbon groups and having a weight-average molecular weight of less than 20000 include "FTERGENT 251" (trade name, manufactured by NEOS COMPANY LIMITED), "FTX-218" (trade name, manufactured by NEOS COMPANY LIMITED), "Magafac F-477" (trade name, manufactured by Dainippon Ink and Chemicals, Inc.), "Magafac F-470" (trade name, manufactured by Dainippon Ink and Chemicals, Inc.), "Surflon S-381" (trade name, manufactured by Seimi Chemicals Co., Ltd.), "Surflon S-383" (trade name, manufactured by Seimi Chemicals Co., Ltd.), "Surflon S-393" (trade name, manufactured by Seimi Chemicals Co., Ltd.), "Surflon KH-20" (trade name, manufactured by Seimi Chemicals Co., Ltd.), "Surflon KH-40" (trade name, manufactured by Seimi Chemicals Co., Ltd.) and the like. Specific examples of the fluorochemical surfactants containing oxy-$C_{2-3}$-alkylene groups and fluorinated hydrocarbon groups and having a weight-average molecular weight of 20000 or more include "EFTOP EF-352" (trade name, manufactured by Jemco Co., Ltd.), "EFTOP EF-801" (trade name, manufactured by JEMCO Inc.), "Unidyne G-656" (trade name, manufactured by DAIKIN INDUSTRIES, ltd.) and the like, and any one of them can be used preferable in the present invention.

The used amount of the fluorochemical surfactant used (solid matter) is not particularly limited, but can be selected, for example, in the range of 0.01 to 5 wt parts (preferably 0.02 to 3 wt parts, more preferably 0.03 wt parts to 1 wt part), with respect to 100 wt parts of all monomer components for the base polymer in the viscoelastic composition [particularly, to all monomer components for the acrylic polymer containing an alkyl (meth)acrylate as the principal monomer component]. A content of less than 0.01 part may lead to deterioration in the adhesiveness and the friction between the microspheres and the polymer in the viscoelastic layer (X), while a content of more than 5 wt parts may cause a problem such as increase in cost or deterioration in adhesive performance.

The viscoelastic composition for the viscoelastic layer (X) may contain suitable additives according to application, in addition to the components above(such as fluorochemical surfactant, base polymer, hollow microspheres, polymerization initiator and the like). Examples thereof include crosslinking agents (e.g., polyisocyanate-based crosslinking agents, silicone-based crosslinking agents, epoxy-based crosslinking agents, alkyletherified melamine-based crosslinking agents and the like), tackifiers (e.g., resins which are solid, semi-solid or liquid at room temperature such as rosin derivative resins, polyterpene resins, petroleum resins, and oil-soluble phenol resins), plasticizers, fillers, antioxidants, colorants (pigments and dyes) and the like. For example in forming a viscoelastic layer (X) with a photopolymerization initiator, a pigment (coloring pigment) may be added for color development of the viscoelastic layer (X) in an amount that does not inhibit photopolymerization. If the color of the viscoelastic layer (X) is desirably black, for example, carbon black may be used. The amount of the carbon black used as coloring pigment is preferably selected, for example, in the range of 0.15 wt part or less (e.g., 0.001 to 0.15 wt part), and preferably 0.02 to 0.1 wt part with respect to 100 wt parts of all monomers for the base polymer in the viscoelastic composition [particularly, all monomer components for acrylic polymer having an alkyl (meth)acrylate as the principal monomer component], from the viewpoints of the degree of color development and the efficiency of photopolymerization reaction.

In the present invention, if bubbles are to be added to the viscoelastic layer (X), bubbles are preferably blended and mixed into the viscoelastic composition as the last component, for stabilized presence of the bubbles in the viscoelastic layer (X), and it is preferable in particular to make the bubble-containing viscoelastic composition before bubble mixing (referred to as "bubble-containing viscoelastic precursor") more viscous. The viscosity of the bubble-containing viscoelastic precursor is not particularly limited as long as it is a viscosity allowing reliable preservation of the mixed bubbles, and the viscosity, as determined by using a BH viscometer (under the condition of rotor: No.5 rotor, rotational frequency: 10 rpm, measurement temperature: 30°C), is desirably, for example, 5 to 50 Pa·s (preferably 10 to 40 Pa·s). If the viscosity of the bubble-containing viscoelastic precursor (BH viscometer, No.5 rotor, 10 rpm, 30°C) is less than 5 Pa·s, the precursor is too less viscous, possibly leading to coalescence and removal of the mixed bubbles from the system, while the precursor having a viscosity of more than 50 Pa·s is too viscous, making it difficult to form the viscoelastic layer (X).

The viscosity of the bubble-containing viscoelastic precursor can be adjusted, for example, by a method of blending various polymer components such as acrylic rubber and thickening additive, a method of polymerizing part of the monomer components for the base polymer [e.g., a monomer component such as an alkyl (meth) acrylate for the acrylic polymer], or the like. Specifically, the bubble-containing viscoelastic precursor having a suitable viscosity allowing reliable preservation of bubbles can be prepared, for example, by preparing a monomer mixture by mixing the monomer component for the base polymer [for example, monomer component such as an alkyl (meth) acrylate for the acrylic polymer] and a polymerization initiator (e.g., photopolymerization initiator), preparing a polymerized composition (syrup) in which only part of the monomer component is polymerized by subjecting the monomer mixture to polymerization reaction suitable for the kind of the polymerization initiator, and blending the syrup with a fluorochemical surfactant and microspheres, and additionally as needed various additives. Incorporation and mixing of bubbles in the bubble-containing viscoelastic precursor gives an bubble-containing viscoelastic composition containing bubbles consistently. In preparation of the syrup, a fluorochemical surfactant or microspheres may be previously blended properly during the monomer mixing.

The method of mixing bubbles is not particularly limited, and any known bubble-mixing method may be used. An example of such an apparatus is an apparatus including a disk having a through-hole in the center, and a stator with many small gears and another stator with gears placed thereon facing each other and additionally a rotor with small gears similar to those of the stators formed thereon. A mixed bubble-containing viscoelastic composition can be obtained in the apparatus by introducing the bubble-containing viscoelastic precursor into the space between the gears on the stator and the gears of the rotor and supplying a gas component (bubble-forming gas) for incorporation of bubbles through the through-hole into the bubble-containing viscoelastic precursor while the rotor is rotated at high speed, because the bubble-forming gas is dispersed finely and mixed in the bubble-containing viscoelastic precursor.

To suppress or prevent coalescence of bubbles, it is preferable to carry out the steps from the incorporation of bubbles to the formation of the microsphere-containing viscoelastic layer (X) continuously as a series of steps. Specifically, it is preferable to form a viscoelastic layer (X) by preparing a bubble-containing viscoelastic composition by mixing bubbles as described above and then, form a viscoelastic layer (X) with the bubble-containing viscoelastic composition, for example by using the following method of forming a viscoelastic layer (X).

The method of forming a viscoelastic layer (X) is not particularly limited, but, for example, the viscoelastic layer (X) is formed by forming a viscoelastic composition layer by coating a viscoelastic composition on a suitable carrier such as release film or base film and hardening (e.g., by heat or active energy ray) and drying the layer as needed. If the layer is cured with active energy ray (phorocuring), because the photopolymerization reaction is inhibited by oxygen in air, it is preferable to block the oxygen, for example, by placing a release film (separator) or the like on the layer or carrying out the photocuring operation under nitrogen atmosphere. The release film (separator) or the like used during formation of the viscoelastic layer (X) may be separated at a suitable time in preparation of the acrylic pressure-sensitive adhesive sheet according to the present invention or when the acrylic pressure-sensitive adhesive sheet is used after preparation.

The thickness of the viscoelastic layer (X) is not particularly limited, and can be selected, for example, in the range of 200 to 5000 $\mu$m (preferably 300 to 4000 $\mu$m, more preferably 400 to 3000 $\mu$m). A viscoelastic layer (X) having thickness of less than 200 $\mu$m leads to deterioration in cushioning property and adhesiveness to curved or irregular surfaces, while a thickness of more than 5000 $\mu$m makes it difficult to produce a layer or sheet with uniform thickness. The viscoelastic layer (X) may be in the form of a single layer or multiple layers.

The viscoelastic layer (X) can be converted to a pressure-sensitive adhesive sheet having an adhesive strength needed for pressure-sensitive adhesive sheet or a sheet of carrier having no adhesive strength, for example by modifying the composition of the base polymer contained in the viscoelastic layer (X), and by adjusting the kinds and the amounts of the additives and others, and the polymerization degree of the polymer.

(Release film)

The release film (separator) is used in production of the acrylic pressure-sensitive adhesive sheet according to the present invention or as a protective material, for example, of the adhesive face of the product before use. The release film is not always needed in production of the acrylic pressure-sensitive adhesive sheet according to the present invention, but, because the photopolymerization reaction is inhibited for example by oxygen in air, it is preferable to coat the surface with a release film for prevention of the contact thereof with oxygen. Normally, the release film is removed when the acrylic pressure-sensitive adhesive sheet according to the present invention is used.

Such a release film is not particularly limited as long as it blocks oxygen and transmits light, and examples thereof include base films which are release-coated (parting-coated) with a release coating agent (parting agent) at least on one face, low-adhesive base films of a fluorochemical polymer (e.g., polytetrafluoroethylene, polychloro-trifluoroethylene, polyvinyl fluoride, polyvinylidene fluoride, tetrafluoroethylene-hexafluoropropylene copolymer, chlorofluoroethylene-vinylidene fluoride copolymer, etc.), low-adhesive base films of a non-polar polymer (e.g., olefinic resin such as polyethylene or polypropylene), and the like. Both faces of the low-adhesive base film may be used as the release faces, while the release-coated face of a release-coated base film may be used as the release face.

Examples of the release-coated (parting) base films at least on one face, which is used as the release film include polyester films such as polyethylene terephthalate film; olefinic resin films such as polyethylene film and polypropylene film; polyvinyl chloride films; polyimide films; polyamide film such as nylon film; and plastic base films (synthetic resin films) such as rayon film. Alternatively, base paper materials (base materials of paper such as woodfree paper, Japanese paper, Kraft paper, glassine paper, synthetic paper or topcoat paper) may be used. In particular, polyester films such as polyethylene terephthalate film are used preferably.

The release coating agent (parting agent) is not particularly limited, and, for example, a silicone-based release coating agent, a fluorine-based release coating agent, a long-chain alkyl-based release coating agent or the like may be used. The release coating agents may be used alone or in combination of two or more. The release film is prepared, for example, by a traditionally known method.

The thickness of the release film is not particularly limited as long as it blocks oxygen and transmits light. In addition, the release film may be in the shape of a single layer or multiple layers.

(Adherends)

The adherend to which the acrylic pressure-sensitive adhesive sheet according to the present invention is applied is not particularly limited, and examples thereof include coatings (e.g., automotive coatings), painted plates, resin plates, metal plates such as steel plate, and the like. The shape of the adherend is not particularly limited either. For example, the adherend may be an adherend in the flat-plate shape or three-dimensional-curved shape or an adherend prepared by coating a flat-plate-shaped or three-dimensionally curved molding.

The coating is not particularly limited and examples thereof include polyester-melamine-based coatings, alkyd-melamine-based coatings, acrylic-melamine-based coatings, acrylic-urethane-based coatings, acrylic-polyacid hardener-based coatings and the like.

The acrylic pressure-sensitive adhesive sheet according to the present invention is used preferably to coatings having the surface control agent (e.g., surface control agent such as acrylic, acryl oligomer-based, vinyl-based, silicone-based, silicone/acryl copolymer-based or the like) bleeding thereon. Since high-polar surface control agents [surface control agents having a solubility parameter (SP value), as determined by the Fedors method aboce, of 20.5 $(MPa)^{1/2}$

or more] are compatible with the acrylic acid monomer unit in the pressure-sensitive adhesive layer (Y) and the low-polar surface control agents [surface control agents having a solubility parameter (SP value), as determined by the Fedors method above, of less than 20.5 $(MPa)^{1/2}$] with the n-butyl acrylate monomer and 2-ethylhexyl acrylate monomer units in the pressure-sensitive adhesive layer (Y), the surface control agents diffuse into the pressure-sensitive adhesive layer (Y), as they are absorbed into the pressure-sensitive adhesive layer (Y), preventing formation of a layer lower in coated-surface cohesive force.

Examples of the high-polar surface control agents include silicone-based surface control agents such as modified silicone-based surface control agents and the like. Examples of the low-polar surface control agents include acrylic surface control agents such as butyl acrylate-based control agents and the like.

(Method for producing acrylic pressure-sensitive adhesive sheet)

The method of producing the acrylic pressure-sensitive adhesive sheet according to the present invention is not particularly limited as long as an acrylic pressure-sensitive adhesive sheet in a configuration having at least a pressure-sensitive adhesive layer (Y) on one or both sides of the viscoelastic layer (X) can be prepared, and an example thereof is a method of producing the acrylic pressure-sensitive adhesive sheet by forming a pressure-sensitive adhesive layer (Y) by irradiation of active energy ray on an acrylic pressure-sensitive adhesive composition containing acrylic acid in an amount of 6 to 12 wt % with respect to all monomer components and n-butyl acrylate in an amount of 35 to 65 wt % with respect to the total amount of 2-ethylhexyl acrylate and n-butyl acrylate at least on one side of a viscoelastic layer (X) containing an acrylic polymer containing microspheres and an alkyl (meth)acrylate as base polymer as the principal monomer component. Normally, the acrylic pressure-sensitive adhesive composition contains a photopolymerization initiator in an amount of approximately 0.001 to 5 wt parts, with respect to 100 wt parts of the all monomer components.

Examples of the methods for forming a pressure-sensitive adhesive layer (Y) at least on one side of the viscoelastic layer (X) include a method of producing a viscoelastic layer (X) and a pressure-sensitive adhesive layer (Y) separately and laminating them with each other; a method of coating an acrylic pressure-sensitive adhesive composition on one or both sides of the previously prepared viscoelastic layer (X) for formation of a layer of the acrylic pressure-sensitive adhesive composition and then forming the pressure-sensitive adhesive layer (Y) by polymerization thereof by irradiation with active energy ray; a method of coating a viscoelastic composition on one side of the previously prepared pressure-sensitive adhesive layer (Y) for formation of a layer of the viscoelastic composition and forming the viscoelastic layer (X) by polymerization thereof; and the like.

Alternatively, a viscoelastic layer (X) and a pressure-sensitive adhesive layer (Y) may be formed simultaneously by irradiation of a laminated body of an acrylic pressure-sensitive adhesive composition layer laminated on one or both sides thereof with active energy ray, as the method of forming a pressure-sensitive adhesive layer (Y) at least on one side of the viscoelastic layer (X). The method of producing an acrylic pressure-sensitive adhesive sheet by using such a method above is superior in productivity as the method of forming a pressure-sensitive adhesive layer (Y) at least on one side of the viscoelastic layer (X) and further, integration of the viscoelastic layer (X) and the pressure-sensitive adhesive layer (Y) in the acrylic pressure-sensitive adhesive sheet produced by the production method above is advantageous for improvement in adhesive strength.

The acrylic pressure-sensitive adhesive sheet according to the present invention can be used preferably for adhesion to hard-to-adhere adherends such as coatings having the surface control agent bleeding thereon. In addition, the acrylic pressure-sensitive adhesive sheet according to the present invention can also be used preferably to the coatings where the surface control agent is bleeding on the surface, even if the surface control agent is high or low polar. The acrylic pressure-sensitive adhesive sheet according to the present invention can also be used preferably in application for adhesion to automotive coatings.

Examples

Hereinafter, the present invention will be described with reference to Examples, but it should be understood that the present invention is not restricted by these Examples.

(Preparation example of syrup 1)

A photopolymerization initiator (trade name: "Irgacure 651", produced by Chiba Specialty Chemicals Corporation): 0.05 wt part and a photopolymerization initiator (trade name: "Irgacure 184", produced by Chiba Specialty Chemicals Corporation): 0.05 wt part were added to a monomer mixture containing 2-ethylhexyl acrylate: 90 wt parts and acrylic acid: 10 wt parts as monomer components, and the mixture was irradiated with ultraviolet ray to a viscosity (BH viscometer, No.5 rotor, 10 rpm, measurement temperature: 30°C) of 15 Pa·s, to give a partially polymerized composition (referred to as "sirup (A)").

(Preparation example of syrup 2)

A photopolymerization initiator (trade name "Irgacure 651", produced by Chiba Specialty Chemicals Corporation): 0.05 wt part and a photopolymerization initiator (trade name: "Irgacure 184", produced by Chiba Specialty Chemicals Corporation): 0.05 wt part were added to a monomer component of 2-ethylhexyl acrylate: 100 wt parts, and the mixture was irradiated with ultraviolet ray to a viscosity (BH viscometer, No.5 rotor, 10 rpm, measurement temperature: 30°C) of 15 Pa·s, to give a partially polymerized composition (referred to as "sirup (B)").

(Preparation example of acrylic sirup 3)

A photopolymerization initiator (trade name "Irgacure 651", produced by Chiba Specialty Chemicals Corporation): 0.05 wt part and a photopolymerization initiator (trade name "Irgacure 184", produced by Chiba Specialty Chemicals Corporation): 0.05 wt part were added to a monomer component of n-butyl acrylate: 100 wt parts, and the mixture was irradiated with ultraviolet ray to a viscosity (BH viscometer, No.5 rotor, 10 rpm, measurement temperature: 30°C) of 15 Pa·s, to give a partially polymerized composition (referred to as "sirup (C)").

(Preparation example of acrylic sirup 4)

A photopolymerization initiator (trade name: "Irgacure 651", produced by Chiba Specialty Chemicals Corporation): 0.05 wt part and a photopolymerization initiator (trade name: "Irgacure 184", produced by Chiba Specialty Chemicals Corporation): 0.05 wt part were added to a monomer mixture containing 2-ethylhexyl acrylate: 70 wt parts and dimethylacrylamide: 30 wt parts as monomer components, and the mixture was irradiated with ultraviolet ray to a viscosity (BH viscometer, No.5 rotor, 10 rpm, measurement temperature: 30°C) of 15 Pa·s, to give a partially polymerized composition (referred to as "sirup (D)").

(Preparation example of acrylic sirup 5)

A photopolymerization initiator (trade name: "Irgacure 651", produced by Chiba Specialty Chemicals Corporation): 0.05 wt part and a photopolymerization initiator (trade name: "Irgacure 184", produced by Chiba Specialty Chemicals Corporation): 0.05 wt part were added to a monomer mixture containing n-butyl acrylate: 90 wt parts and acrylic acid: 10 wt parts as monomer components, and the mixture was irradiated with ultraviolet ray to a viscosity (BH viscometer, No.5 rotor, 10 rpm, measurement temperature: 30°C) of 15 Pa·s, to give a partially polymerized composition (referred to as "sirup (E)").

(Preparation example of viscoelastic composition)

1,6-hexanediol diacrylate: 0.1 wt part was added to the sirup (A): 100 wt parts, and hollow glass balloons (trade name: "Cel-Star Z-27", produced by Tokai Kogyo Co., Ltd.) were added in an amount of 30 vol % with respect to the entire sirup.
After addition of the hollow glass balloons to the sirup, a fluorochemical surfactant (trade name: "Surflon S-393", produced by Seimi Chemicals Co., Ltd., an acrylic copolymer having polyoxyethylene groups and fluorinated hydrocarbon groups on the side chains, Mw: 8300): 1 wt part was added additionally, to give a bubble-containing viscoelastic precursor. The volume of the hollow glass balloons in the bubble-containing viscoelastic precursor with respect to the entire volume of the bubble-containing viscoelastic precursor was approximately 23 vol %.
The bubble-containing viscoelastic precursor was fed into the space between the stator gears and rotor gears in an apparatus including a circular plate with a through-hole at the center, a stator having many small gears and another stator having gears facing each other, and a rotor, having small gears similar to those of stator, being placed on a circular plate. The rotor was rotated at high speed while nitrogen gas was supplied into the bubble-containing viscoelastic precursor through the through-hole for generation of bubbles in the bubble-containing viscoelastic precursor to give a bubble-containing viscoelastic composition. The bubbles were supplied in volume of approximately 15 vol% with respect to the entire volume of the bubble-contaiing viscoelastic precursor.

(Preparation example of acrylic pressure-sensitive adhesive composition 1)

The syrup (B): 45 wt parts, the syrup (C): 45 wt parts and acrylic acid monomer: 10 wt parts were mixed; 1,6-hexanediol diacrylate: 0.1 wt part was added thereto additionally; and the mixture was mixed under agitation to give an acrylic pressure-sensitive adhesive composition (referred to as "acrylic pressure-sensitive adhesive composition (A)").

(Preparation example of acrylic pressure-sensitive adhesive composition 2)

The syrup (B): 36 wt parts, the sirup (C): 54 wt parts and acrylic acid monomer: 10 wt parts were mixed; 1,6-hexanediol diacrylate: 0.1 wt part was added thereto additionally; and the mixture was mixed under agitation to give an acrylic pressure-sensitive adhesive composition (referred to as "acrylic pressure-sensitive adhesive composition (B)").

(Preparation example of acrylic pressure-sensitive adhesive composition 3)

The syrup (B): 54 wt parts, the syrup (C): 36 wt parts and acrylic acid monomer: 10 wt parts were mixed; 1,6-hexanediol diacrylate: 0.1 wt parts was added thereto additionally; and the mixture was mixed under agitation to give an acrylic pressure-sensitive adhesive composition (referred to as "acrylic pressure-sensitive adhesive composition (C)").

(Preparation example of acrylic pressure-sensitive adhesive composition 4)

The syrup (B): 35 wt parts, the syrup (C): 53 wt parts and acrylic acid monomer: 12 wt parts were mixed; 1, 6-hexanediol diacrylate: 0.1 wt part was added thereto additionally; and the mixture was mixed under agitation to give an acrylic pressure-sensitive adhesive composition (referred to as "acrylic pressure-sensitive adhesive composition (D)").

(Preparation example of acrylic pressure-sensitive adhesive composition 5)

The syrup (B): 53 wt parts, the syrup (C):35 wt parts and acrylic acid monomer: 12 wt parts were mixed; 1, 6-hexanediol diacrylate: 0.1 wt part was added thereto additionally; and the mixture was mixed under agitation, to give an acrylic pressure-sensitive adhesive composition (referred to as "acrylic pressure-sensitive adhesive composition (E)").

(Preparation example of acrylic pressure-sensitive adhesive composition 6)

The syrup (B): 38 wt parts, the syrup (C): 56 wt parts and acrylic acid monomer: 6 wt parts were mixed; 1,6-hexanediol diacrylate: 0.1 wt part was added thereto additionally; and the mixture was mixed under agitation to give an acrylic pressure-sensitive adhesive composition (referred to as "acrylic pressure-sensitive adhesive composition (F)").

(Preparation example of acrylic pressure-sensitive adhesive composition 7)

The syrup (B): 56 wt parts, the syrup (C): 38 wt parts and acrylic acid monomer: 6 wt parts were mixed; 1,6-hexanediol diacrylate: 0.1 wt part was added thereto additionally; and the mixture was mixed under agitation, to give an acrylic pressure-sensitive adhesive composition (referred to as "acrylic pressure-sensitive adhesive composition (G)").

(Preparation example of acrylic pressure-sensitive adhesive composition 8)

1, 6-hexanediol diacrylate: 0.1 wt part was added to the sirup (D): 100 wt parts; and the mixture was mixed under agitation to give an acrylic pressure-sensitive adhesive composition (referred to as "acrylic adhesive pressure-sensitive composition (H)").

(Preparation example of acrylic pressure-sensitive adhesive composition 9)

The syrup (B): 47.5 wt parts, the syrup (C):47.5 wt parts and acrylic acid monomer: 5 wt parts were mixed; 1,6-hexanediol diacrylate: 0.1 wt part was added thereto additionally; and the mixture was mixed under agitation to give an acrylic pressure-sensitive adhesive composition (referred to as "acrylic pressure-sensitive adhesive composition (I)").

(Preparation example of acrylic pressure-sensitive adhesive composition10)

The syrup (B): 49 wt parts, the syrup (C): 49 wt parts and acrylic acid monomer: 2 wt parts were mixed; 1,6-hexanediol diacrylate: 0.1 wt part was added thereto additionally; and the mixture was mixed under agitation to give an acrylic pressure-sensitive adhesive composition (referred to as " acrylic pressure-sensitive adhesive composition (J)").

(Preparation example of acrylic pressure-sensitive adhesive composition 11)

The syrup (B): 43 wt parts, the syrup (C): 43 wt parts and acrylic acid monomer: 14 wt parts were mixed; 1,6-hexanediol diacrylate: 0.1 wt part was added thereto additionally; and the mixture was mixed under agitation to give an acrylic pressure-sensitive adhesive composition (referred to as "acrylic pressure-sensitive adhesive composition (K)").

(Preparation example of acrylic pressure-sensitive adhesive composition 12)

1, 6-Hexanediol diacrylate: 0.1 wt parts was added to the syrup (E):100 wt parts; and the mixture was mixed under agitation to give an acrylic pressure-sensitive adhesive composition (referred to as "acrylic pressure-sensitive adhesive composition (L)").

(Usage example of release film)

A polyethylene terephthalate base film which is release-coated on one side (trade name: "MRF", produced by Mitsubishi Polyester Film Inc.) was used as the release film (cover film; cover separator).

(Example 1)

The bubble-containing viscoelastic composition above was introduced into a wet-lamination roll coater with a tube (diameter: 19 mm, length: 1.5 m), and a bubble-mixture viscoelastic composition was coated between two release films above so as to have a post-drying/hardening thickness of 1.0 mm by using the wet-lamination roll coater, forming a bubble-containing viscoelastic composition layer, consequently to give a bubble-containing viscoelastic composition layer sheet. The bubble-containing viscoelastic composition layer sheet has a configuration in which a bubble-containing viscoelastic composition layer is formed between the release films with the respective release-coated faces of release films facing the layer. The bubble-containing viscoelastic composition layer is then cured by irradiation with ultraviolet ray from both sides (illuminance: 5 mW/cm$^3$) for 3 minutes to give a sheet with its viscoelastic layer protected with release films on both faces (referred to as "viscoelastic layer sheet").

The acrylic pressure-sensitive adhesive composition (A) was coated on the release-coated face of the release films so as to have a post-hardening thickness of 50 $\mu$m with an applicator, forming an acrylic pressure-sensitive adhesive composition layer, and the release film was laminated onto the layer with its release-coated face facing the layer. Then, the acrylic pressure-sensitive adhesive composition layer is cured by irradiation of ultraviolet ray (illuminance: 5 mW/cm$^3$) for 3 minutes to give a sheet having an acrylic pressure-sensitive adhesive layer (referred to as "acrylic pressure-sensitive adhesive layer sheet").

Release films on one side of the viscoelastic layer sheet and the acrylic pressure-sensitive adhesive layer sheet were removed for exposure of the viscoelastic layer and the acrylic pressure-sensitive adhesive layer; the viscoelastic layer sheet and the acrylic pressure-sensitive adhesive layer sheet were then laminated to each other; and the resulting film was left for 48 hours to give a pressure-sensitive adhesive sheet having an acrylic pressure-sensitive adhesive layer on one side of the viscoelastic layer.

(Example 2)

A pressure-sensitive adhesive sheet having an acrylic pressure-sensitive adhesive layer on one side of the viscoelastic layer (X) was prepared in a manner similar to Example 1, except that the acrylic pressure-sensitive adhesive composition (A) was replaced with the acrylic pressure-sensitive adhesive composition (B).

(Example 3)

A pressure-sensitive adhesive sheet having an acrylic pressure-sensitive adhesive layer on one side of the viscoelastic layer (X) was prepared in a manner similar to Example 1, except that the acrylic pressure-sensitive adhesive composition (A) was replaced with the acrylic pressure-sensitive adhesive composition (C).

(Example 4)

A pressure-sensitive adhesive sheet having an acrylic pressure-sensitive adhesive layer on one side of the viscoelastic layer (X) was prepared in a manner similar to Example 1, except that the acrylic pressure-sensitive adhesive composition (A) was replaced with the acrylic pressure-sensitive adhesive composition (D).

(Example 5)

A pressure-sensitive adhesive sheet having an acrylic pressure-sensitive adhesive layer on one side of the viscoelastic layer (X) was prepared in a manner similar to Example 1, except that the acrylic pressure-sensitive adhesive composition (A) was replaced with the acrylic pressure-sensitive adhesive composition (E).

(Example 6)

A pressure-sensitive adhesive sheet having an acrylic pressure-sensitive adhesive layer on one side of the viscoelastic layer (X) was prepared in a manner similar to Example 1, except that the acrylic pressure-sensitive adhesive composition (A) was replaced with the acrylic a pressure-sensitive adhesive composition (F).

(Example 7)

A pressure-sensitive adhesive sheet having an acrylic pressure-sensitive adhesive layer on one side of the viscoelastic layer (X) was prepared in a manner similar to Example 1, except that the acrylic pressure-sensitive adhesive composition (A) was replaced with the acrylic pressure-sensitive adhesive composition (G).

(Comparative Example 1)

A pressure-sensitive adhesive sheet having an acrylic pressure-sensitive adhesive layer on one side of the viscoelastic layer (X) was prepared in a manner similar to Example 1, except that the acrylic pressure-sensitive adhesive composition (A) was replaced with the sirup (A).

(Comparative Example 2)

A pressure-sensitive adhesive sheet having an acrylic pressure-sensitive adhesive layer on one side of the viscoelastic layer (X) was prepared in a manner similar to Example 1, except that the acrylic pressure-sensitive adhesive composition (A) was replaced with the acrylic pressure-sensitive adhesive composition (H).

(Comparative Example 3)

A pressure-sensitive adhesive sheet having an acrylic pressure-sensitive adhesive layer on one face of the viscoelastic layer (X) was prepared in a manner similar to Example 1, except that the acrylic pressure-sensitive adhesive composition (A) was replaced with the acrylic pressure-sensitive adhesive composition (I).

(Comparative Example 4)

A pressure-sensitive adhesive sheet having an acrylic pressure-sensitive adhesive layer on one side of the viscoelastic layer (X) was prepared in a manner similar to Example 1, except that the acrylic pressure-sensitive adhesive composition (A) was replaced with the acrylic pressure-sensitive adhesive composition (J).

(Comparative Example 5)

A pressure-sensitive adhesive sheet having an acrylic pressure-sensitive adhesive layer on one side of the viscoelastic layer (X) was prepared in a manner similar to Example 1, except that the acrylic pressure-sensitive adhesive composition (A) was replaced with the acrylic pressure-sensitive adhesive composition (K).

(Comparative Example 6)

A pressure-sensitive adhesive sheet having an acrylic pressure-sensitive adhesive layer on one side of the viscoelastic layer (X) was prepared in a manner similar to Example 1, except that the acrylic pressure-sensitive adhesive composition (A) was replaced with the acrylic pressure-sensitive adhesive composition (L).

(Evaluation)

The adhesive strength to the coatings having the high-polar surface control agent bleeding thereon (unwashed) and the coatings having a low-polar surface control agent bleeding thereon (unwashed) of the acrylic adhesive compositions obtained in Examples 1 to 7 and Comparative Examples 1 to 6 were determined by the following method (method of measuring adhesive strength). The respective pressure-sensitive adhesive sheets were evaluated by the following methods (evaluation methods). The results of the adhesive strength test and the evaluation results are summarized in Table 1.

An epoxy group-containing acrylic polyacid-based coating having the surface control agent bleeding thereon, containing a polyether-modified silicone-based surface control agent in an amount of 0.3 wt part with respect to 100 wt parts of the paint components, was used as the coating having the high-polar surface control agent bleeding thereon (unwashed), and an epoxy group-containing acrylic polyacid-based coating having the surface control agent bleeding thereon, containing a butyl acrylate-based surface control agent in an amount of 0.3 wt part with respect to 100 wt parts of the paint components, was used as the coating having the low-polar surface control agent bleeding thereon (unwashed).

(Method of measuring adhesive strength)

Each of the pressure-sensitive adhesive sheets obtained in Examples and Comparative Examples was cut to a sheet width of 25 mm under an atmosphere at 23°C; the release film of the pressure-sensitive adhesive sheet was removed to expose the acrylic pressure-sensitive adhesive layer; the resulting sheet was pressed onto a coating with one way moving of a 5-kg roller; and the laminate coating was aged at 23°C for 30 minutes. After aging, the stress applied when the sheet was peeled to an angle of 180°at a tensile speed of 50 mm/min under an atmosphere at 23°C was determined; the maximum value of the stress then was determined and used as the adhesive strength to the coating (N/25 mm).

(Method of evaluating tackiness)

The tackiness to the coating of each of the pressure-sensitive adhesive sheets obtained in Examples and Comparative Examples was evaluated according to the following evaluation criteria.

○(Good tackiness): Adhesive strength: 20 (N/25 mm) or more
×(Bad tackiness): Adhesive strength: less than 20 (N/25 mm)

(Method of evaluating compatibility)

The adhesive strength of each of the pressure-sensitive adhesive sheets obtained in Examples and Comparative Examples to the coating having the high-polar surface control agent bleeding thereon (unwashed) and to the coating having the low-polar surface control agent bleeding thereon (unwashed) was evaluated according to the following evaluation criteria.

O(Good compatibility): The adhesive strengths to the coating having the high-polar surface control agent bleeding thereon (unwashed) and to the coating having the low-polar surface control agent bleeding thereon (unwashed) were good in the test for evaluation of tackiness.

×(Bad compatibility to surface control agent-bleeding faces): The adhesive strengths to the coating having the high-polar surface control agent bleeding thereon (unwashed) and to the coating having the low-polar surface control agent bleeding thereon (unwashed) were bad in the test for evaluation of tackiness.

【Table 1】

| | | Composition | Coating having the high-polar surface control agent bleeding thereon | | Coating having the low-polar surface control agent bleeding thereon | | Compatibility |
|---|---|---|---|---|---|---|---|
| | | | Adhesive strength (N/25mm) | Tackiness | Adhesive strength (N/25 mm) | Tackiness | |
| Example | 1 | 2EHA/BA/AA =45/45/10 | 30 | o | 28 | o | o |
| | 2 | 2EHA/BA/AA =36/54/10 | 29 | o | 29 | o | o |
| | 3 | 2EHA/BA/AA =54/36/10 | 31 | o | 27 | o | o |
| | 4 | 2EHA/BA/AA =35/53/12 | 32 | o | 32 | o | o |
| | 5 | 2EHA/BA/AA =53/35/12 | 34 | o | 30 | o | o |
| | 6 | 2EHA/BA/AA =38/56/6 | 24 | o | 24 | o | o |
| | 7 | 2EHA/BA/AA =56/38/6 | 26 | o | 22 | o | o |
| Comparative Example | 1 | 2EHA/AA =90/10 | 25 | o | 15 | × | × |
| | 2 | 2EHA/DMAA =90/10 | 10 | × | 34 | o | × |
| | 3 | 2EHA/BA/AA =47.5/47.5/5 | 19 | × | 18 | × | × |
| | 4 | 2EHA/BA/AA =49/49/2 | 15 | × | 14 | × | × |
| | 5 | 2EHA/BA/AA =43/43/14 | "Stick-slip" | × | "Stick-slip" | × | × |
| | 6 | BA/AA =90/10 | 22 | o | 12 | × | × |

In Table 1, 2EHA represents 2-ethylhexyl acrylate; BA represents n-butyl acrylate; AA represents acrylic acid; and DMAA represents dimethylacrylamide. The "stick-slip" means occurence of the stick-slip phenomenon.

The pressure-sensitive adhesive sheets obtained in Examples had high adhesive strength (tackiness) to the unwashed coating having the surface control agent bleeding thereon, independently of whether it is a high-or low-polar surface control agent. The effect is based on absorption of the surface control agent bleeding on the coating surface by the pressure-sensitive adhesive layer.

The pressure-sensitive adhesive sheet of Comparative Example 1, which contained no n-butyl acrylate, did not show good tackiness to the coating having the low-polar surface control agent bleeding thereon.

The pressure-sensitive adhesive sheet of Comparative Example 2, a pressure-sensitive adhesive sheet in which the polar pressure-sensitive adhesive layer was formed by using dimethylacrylamide, did not show good tackiness to the coating having the high-polar surface control agent bleeding thereon.

The pressure-sensitive adhesive sheets of Comparative Examples 3 and 4, which contained a smaller amount of acrylic acid, did not show good tackiness both to the coating having the high-polar surface control agent bleeding thereon and the coating having the low-polar surface control agent bleeding thereon.

The pressure-sensitive adhesive sheet of Comparative Example 5, which contained a greater amount of acrylic acid, had an excessively hard pressure-sensitive adhesive layer, causing the stick-slip phenomenon.

The pressure-sensitive adhesive sheet of Comparative Example 6, which contained a greater amount of n-butyl acrylate, had an excessively hard pressure-sensitive adhesive layer and did not show good tackiness to the coating having the low-polar surface control agent bleeding thereon.

Industrial Applicability

The acrylic pressure-sensitive adhesive tape or sheet according to the present invention can be used for adhesion to hard-to-adhere adherends, such as automotive coatings, having the surface control agent bleeding on the surface.

**Claims**

1. An acrylic pressure-sensitive adhesive tape or sheet,
   **characterized by** having a viscoelastic layer (X) containing microspheres and an acrylic polymer containing an alkyl (meth)acrylate as a principal monomer component as a base polymer and a pressure-sensitive adhesive layer (Y) formed at least on one side of the viscoelastic layer (X) by polymerization of an acrylic monomer mixture containing 2-ethylhexyl acrylate, n-butyl acrylate and acrylic acid or a prepolymer of the acrylic monomer mixture,
   wherein the thickness of the pressure-sensitive adhesive layer (Y) is 10 $\mu$m to 5 mm, and
   wherein the amount of acrylic acid is 6 to 12 wt % with respect to all monomer components.

2. The acrylic pressure-sensitive adhesive tape or sheet according to Claim 1, wherein the amount of a photopolymerization initiator in the acrylic monomer mixture or the prepolymer of the acrylic monomer mixture is 0.001 to 5 wt parts with respect to 100 wt parts of all monomer components.

3. The acrylic pressure-sensitive adhesive tape or sheet according to Claim 1 or 2, wherein the microspheres are hollow glass balloons.

4. The acrylic pressure-sensitive adhesive tape or sheet according to any one of Claims 1 to 3, wherein the viscoelastic layer (X) is a layer obtained by irradiation of a viscoelastic composition containing microspheres, a (meth) acrylic ester as the principal monomer component and a photopolymerization initiator with active energy ray.

5. The acrylic pressure-sensitive adhesive tape or sheet according to any one of Claims 1 to 4, for use in application for adhesion to automotive coatings.

6. The acrylic pressure-sensitive adhesive tape or sheet according to Claim 5, wherein the coating is a coating having the silicone-based surface control agent bleeding thereon.

7. The acrylic pressure-sensitive adhesive tape or sheet according to Claim 5, wherein the coating is a coating having the acrylic surface control agent bleeding thereon.

8. A method for producing an acrylic pressure-sensitive adhesive tape or sheet, **characterized by** forming a pressure-sensitive adhesive layer (Y) at least on one side of a viscoelastic layer (X) containing microspheres and an acrylic polymer containing an (meth) acrylic ester as the principal monomer component as the base polymer, by polymerization of an acrylic monomer mixture containing 2-ethylhexyl acrylate, n-butyl acrylate and acrylic acid or a prepolymer of the acrylic monomer mixture,
   wherein the thickness of the pressure-sensitive adhesive layer (Y) is 10 $\mu$m to 5 mm, and
   wherein the amount of acrylic acid is 6 to 12 wt % with respect to all monomer components.

**Patentansprüche**

1. Acrylhaftklebeband oder -folie,
   **dadurch gekennzeichnet, dass** es bzw. sie eine viskoelastische Schicht (X), die Mikrokügelchen und ein Acrylpolymer, das ein Alkyl(meth)acrylat als eine Hauptmonomerkomponente enthält, als Grundpolymer enthält, und eine Haftklebeschicht (Y) aufweist, die wenigstens auf einer Seite der viskoelastischen Schicht (X) durch Polymerisation einer Acrylmonomermischung, die 2-Ethylhexylacrylat, n-Butylacrylat und Acrylsäure enthält, oder eines Präpolymers der Acrylmonomermischung gebildet ist,
   wobei die Dicke der Haftklebeschicht (Y) 10 $\mu$m bis 5 mm beträgt, und
   wobei die Menge an Acrylsäure 6 bis 12 Gew.-%, bezogen auf alle Monomerkomponenten, beträgt.

2. Acrylhaftklebeband oder -folie nach Anspruch 1, wobei die Menge eines Fotopolymerisationsinitiators in der Acrylmonomermischung oder dem Präpolymer der Acrylmonomermischung 0,001 bis 5 Gewichtsteile, bezogen auf 100 Gewichtsteile von allen Monomerkomponenten, beträgt.

**3.** Acrylhaftklebeband oder -folie nach Anspruch 1 oder 2, wobei die Mikrokügelchen hohle Glasballons sind.

**4.** Acrylhaftklebeband oder -folie nach einem der Ansprüche 1 bis 3, wobei die viskoelastische Schicht (X) eine Schicht ist, die durch Bestrahlung einer viskoelastischen Zusammensetzung, die Mikrokügelchen, einen (Meth)acrylester als die Hauptmonomerkomponente und einen Fotopolymerisationsinitiator enthält, mit aktiven Energiestrahlen erhalten wird.

**5.** Acrylhaftklebeband oder -folie nach einem der Ansprüche 1 bis 4 zur Verwendung bei der Anwendung zur Adhäsion an Automobilbeschichtungen.

**6.** Acrylhaftklebeband oder -folie nach Anspruch 5, wobei die Beschichtung eine Beschichtung ist, auf der ein Oberflächenkontrollmittel auf Siliconbasis ausblutet.

**7.** Acrylhaftklebeband oder -folie nach Anspruch 5, wobei die Beschichtung eine Beschichtung ist, auf der ein Acryl-Oberflächenkontrollmittel ausblutet.

**8.** Verfahren zum Herstellen eines Acrylhaftklebebandes oder einer Acrylhaftklebefolie, **gekennzeichnet durch** Bilden einer Haftklebeschicht (Y) wenigstens auf einer Seite einer viskoelastischen Schicht (X), die Mikrokügelchen und ein Acrylpolymer, das einen (Meth)acrylester als die Hauptmonomerkomponente enthält, als das Grundpolymer enthält, **durch** Polymerisation einer Acrylmonomermischung, die 2-Ethylhexylacrylat, n-Butylacrylat und Acrylsäure enthält, oder eines Präpolymers der Acrylmonomermischung,
wobei die Dicke der Haftklebeschicht (Y) 10 $\mu$m bis 5 mm beträgt, und
wobei die Menge an Acrylsäure 6 bis 12 Gew.-%, bezogen auf alle Monomerkomponenten, beträgt.

## Revendications

**1.** Bande ou feuille adhésive acrylique sensible à la pression,
**caractérisée en ce qu'**elle comporte une couche viscoélastique (X) contenant des microsphères et un polymère acrylique contenant un (méth)acrylate d'alkyle comme principal composant monomère en tant que polymère de base, et une couche adhésive sensible à la pression (Y) formée sur au moins une des faces de la couche viscoélastique (X) par polymérisation d'un mélange monomère acrylique contenant de l'acrylate de 2-éthylhexyl, de l'acrylate de n-butyle et de l'acide acrylique ou un prépolymère du mélange monomère acrylique,
dans laquelle l'épaisseur de la couche adhésive sensible à la pression (Y) est comprise entre 10 $\mu$m et 5 mm, et
dans laquelle la quantité d'acide acrylique est comprise entre 6 % en masse et 12 % en masse par rapport à tous les composants monomères.

**2.** Bande ou feuille adhésive acrylique sensible à la pression selon la revendication 1, dans laquelle la quantité d'amorceur de photopolymérisation dans le mélange monomère acrylique ou le prépolymère du mélange monomère acrylique est comprise entre 0,001 partie en masse et 5 parties en masse par rapport à 100 parties en masse de tous les composants monomères.

**3.** Bande ou feuille adhésive acrylique sensible à la pression selon la revendication 1 ou 2, dans laquelle les microsphères sont des billes creuses en verre.

**4.** Bande ou feuille adhésive acrylique sensible à la pression selon l'une quelconque des revendications 1 à 3, dans laquelle la couche viscoélastique (X) est une couche obtenue par irradiation d'une composition viscoélastique contenant des microsphères, un ester (méth)acrylique comme composant monomère principal et un amorceur de photopolymérisation, avec un rayon d'énergie active.

**5.** Bande ou feuille adhésive acrylique sensible à la pression selon l'une quelconque des revendications 1 à 4, destinée à être utilisée dans une application adhésive pour revêtements automobiles.

**6.** Bande ou feuille adhésive acrylique sensible à la pression selon la revendication 5, dans laquelle le revêtement est un revêtement sur lequel s'étend l'agent de contrôle de surface à base de silicone.

**7.** Bande ou feuille adhésive acrylique sensible à la pression selon la revendication 5, dans laquelle le revêtement est un revêtement sur lequel s'étend l'agent de contrôle de surface acrylique.

**8.** Procédé de production d'une bande ou feuille adhésive acrylique sensible à la pression, **caractérisé par** la formation d'une couche adhésive sensible à la pression (Y) sur au moins une des faces d'une couche viscoélastique (X) contenant des microsphères et un polymère acrylique contenant un ester (méth)acrylique comme principal composant monomère en tant que polymère de base, par polymérisation d'un mélange monomère acrylique contenant de l'acrylate de 2-éthylhexyl, de l'acrylate de n-butyle et de l'acide acrylique ou un prépolymère du mélange monomère acrylique,

dans lequel l'épaisseur de la couche adhésive sensible à la pression (Y) est comprise entre 10 μm et 5 mm, et

dans lequel la quantité d'acide acrylique est comprise entre 6 % en masse et 12 % en masse par rapport à tous les composants monomères.

**EP 2 366 749 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002066206 A
- JP 2003226834 A
- JP 2732411 B